# EUROPEAN PATENT APPLICATION

(11) **EP 4 815 355 A1**
(43) Date of publication of application: **30.09.2026**
(21) Application number: 24923006.1
(22) Date of filing: 08.02.2024
(51) Int. Cl.: H04L 5/00

(54) **UPLINK TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Penza, Giancarlo
(86) International application number: PCT/CN2024/077040
(87) International publication number: WO 2025/166771

(57) **Abstract**

An uplink transmission method and apparatus, a device, and a storage medium, relating to the technical field of mobile communications. The method is executed by a terminal device, and comprises: when a first time-frequency resource and a second time-frequency resource overlap in a time domain, and a first physical uplink shared channel (PUSCH) corresponds to an orthogonal cover code (OCC)-based spread spectrum transmission mode, performing transmission processing (610).

## Description

### TECHNICAL FIELD

The present application relates to the technical field of mobile communication, in particular to an uplink transmission method and apparatus, a device and a storage medium.

### BACKGROUND

In NR system, in order to improve uplink capacity, the concept of Orthogonal Cover Code (OCC) spreading transmission is introduced.

In the related art, a network device in an NR system may allocate overlapping time-frequency resources to a plurality of terminal devices, and a plurality of terminals may perform PUSCH transmission on respective time-frequency resources using different OCCs.

### SUMMARY

Embodiments of the present application provide an uplink transmission method and apparatus, a device and a storage medium. The technical scheme is as follows:

In one aspect, an embodiment of the present application provides an uplink transmission method, the method is executed by a terminal device, the method includes the following operations:

in a case where a first time-frequency resource and a second time-frequency resource overlap in a time domain, and a first physical uplink shared channel (PUSCH) corresponds to an Orthogonal Cover Code (OCC) spreading transmission manner, transmission processing is performed. The transmission processing includes one or more of the following processing: transmitting information obtained by multiplexing first uplink control information (UCI) and a first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

In one aspect, an embodiment of the present application provides an uplink transmission method, the method is executed by a network device, the method includes the following operations:

in a case where a first time-frequency resource and a second time-frequency resource overlap in a time domain, and a first physical uplink shared channel (PUSCH) corresponds to an Orthogonal Cover Code (OCC) spreading transmission manner for transmission, uplink transmission information from a terminal device is received. The uplink transmission information is transmitted when the terminal device performs transmission processing. The transmission processing includes one or more of the following processing: transmitting information obtained by multiplexing first uplink control information (UCI) and a first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

On the other hand, an embodiment of the present application provides an uplink transmission apparatus, the apparatus includes a transmission module.

The transmission module is configured to perform transmission processing in a case where a first time-frequency resource and a second time-frequency resource overlap in a time domain, and a first physical uplink shared channel (PUSCH) corresponds to an Orthogonal Cover Code (OCC) spreading transmission manner. The transmission processing includes one or more of the following processing: transmitting information obtained by multiplexing first uplink control information (UCI) and first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

On the other hand, an embodiment of the present application provides an uplink transmission apparatus, the apparatus includes a receiving module.

The receiving module is configured to receive uplink transmission information from a terminal device in a case where a first time-frequency resource and a second time-frequency resource overlap in a time domain, and a first physical uplink shared channel (PUSCH) corresponds to an Orthogonal Cover Code (OCC) spreading transmission manner for transmission. The uplink transmission information is transmitted when the terminal device performs transmission processing. The transmission processing includes one or more of the following processing: transmitting information obtained by multiplexing first uplink control information (UCI) and first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

In another aspect, an embodiment of the present application provides a communication device including a processor, a memory, and a transceiver.

The memory stores a computer program, and the processor is configured to execute the computer program to cause the communication device to implement the uplink transmission method.

In another aspect, an embodiment of the present application also provides a computer-readable storage medium having a computer program stored thereon, and the computer program is loaded and executed by a processor to realize the uplink transmission method described above.

In another aspect, the present application also provides a chip including an integrated circuit and firmware disposed in the integrated circuit, and the chip is configured to operate in a communication device to cause the communication device to perform the above-described uplink transmission method.

In yet another aspect, the present application provides a computer program product including computer instructions stored in a computer readable storage medium. A processor of a communication device reads the computer instructions from the computer-readable storage medium, and the processor executes the computer instructions to cause the communication device to perform the uplink transmission method described above.

In yet another aspect, the present application provides a computer program executed by a processor of a communication device to implement the uplink transmission method described above.

Through the scheme provided by the embodiments of the present application, when a first time-frequency resource for transmitting a PUSCH and a second time-frequency resource for transmitting a PUCCH overlap, a terminal device can control the transmission of the UCI corresponding to the PUCCH and the UL-SCH corresponding to the PUSCH. Specifically, the UCI or the UL-SCH can be transmitted, the UCI and the UL-SCH can be multiplexed and transmitted, or the UCI/UL-SCH may not be transmitted, thereby supporting the transmission of the UCI and/or the UL-SCH using the OCC when the first time-frequency resource and the second time-frequency resource overlap in the time domain, thereby providing a scheme for enhancing the multiplexed transmission of the UCI and the PUSCH, and further improving the performance of the terminal device when the PUSCH transmission is performed using the OCC.

### BRIEF DESCRIPTION OF THE DRAWINGS

FIG. 1A is a schematic architectural diagram of a communication system according to an embodiment of the present application.
FIG. 1B is a schematic architectural diagram of another communication system according to an embodiment of the present application.
FIG. 1C is a schematic architectural diagram of another communication system according to an embodiment of the present application.
FIG. 2A is a schematic architecture diagram of a communication system according to an embodiment of the present application.
FIG. 2B is a schematic architectural diagram of another communication system according to an embodiment of the present application.
FIG. 2C is a schematic architectural diagram of another communication system according to an embodiment of the present application.
FIG. 3 is a schematic diagram of UCI and PUSCH multiplexing transmission according to an embodiment of the present application.
FIG. 4 is an example diagram of using OCC to transmit PUSCH to improve uplink capacity according to an embodiment of the present application.
FIG. 5 is an example diagram of a time domain OCC spreading according to an embodiment of the present application.
FIG. 6 is a flowchart of an uplink transmission method according to an embodiment of the present application.
FIG. 7 is a flowchart of an uplink transmission method according to an embodiment of the present application.
FIG. 8 is a flowchart of an uplink transmission method according to an embodiment of the present application.
FIG. 9 is a schematic mapping diagram in which the number of symbols or the number of slots included in an OCC spreading unit is M PUSCHs (M =2).
FIG. 10 is another mapping schematic diagram in which the number of symbols or slots included in an OCC spreading unit is M PUSCHs (M =2).
FIG. 11 is a mapping schematic diagram in which the number of symbols or slots included in an OCC spreading unit is one PUSCH.
FIG. 12 is a mapping diagram in which the number of symbols or slots included in an OCC spreading unit is M =4 data symbols.
FIG. 13 is a mapping schematic diagram in which a size of a mapping block included in an OCC spreading unit is the number P of PRBs occupied by the first PUSCH transmission.
FIG. 14 is a mapping schematic diagram in which a size of a mapping block included in an OCC spreading unit is one PRB.
FIG. 15 is a mapping schematic diagram in which a size of a mapping block included in an OCC spreading unit is one RBG.
FIG. 16 is a block diagram of an uplink transmission apparatus according to an embodiment of the present application.
FIG. 17 is a block diagram of an uplink transmission apparatus according to an embodiment of the present application.
FIG. 18 is a schematic structural diagram of a communication device according to an embodiment of the present application.

### DETAILED DESCRIPTION

Scenarios relating to the communication system in the present application may include Terrestrial communication network (TN) systems and Non-Terrestrial communication network (NTN) systems. The NTN generally uses satellite communication to provide communication services to ground users. The NTN systems currently include New Radio (NR)-NTN and Internet of Things (IoT)-NTN systems, and may include other NTN systems in the future.

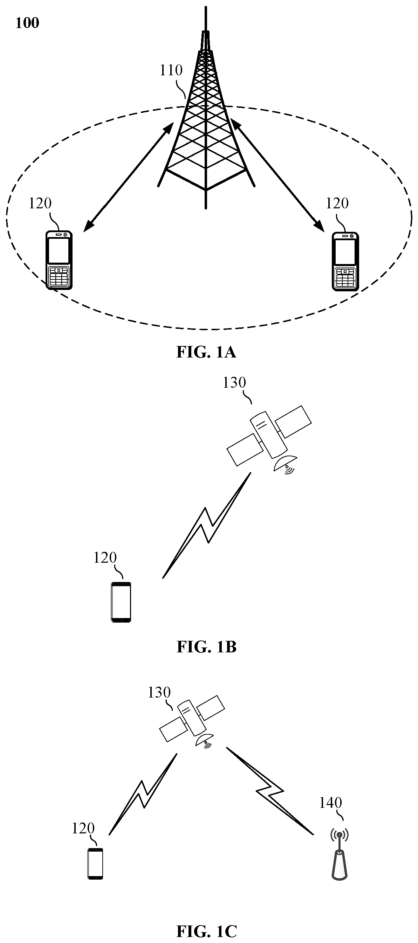

For example, FIG. 1A is a schematic architectural diagram of a communication system according to an embodiment of the present application. As shown in FIG. 1A, the communication system 100 may include a network device 110, which may be a device that communicates with a terminal device 120 (or referred to as a communication terminal device or a terminal device). The network device 110 may provide communication coverage for a particular geographical area and may communicate with terminal devices located within the coverage area.

FIG. 1A exemplarily illustrates one network device and two terminal devices. In some embodiments of the present application, the communication system 100 may include a plurality of network devices, and other number of terminal devices may be included in the coverage area of each network device, which is not limited in the embodiments of the present application.

FIG. 1B is, by way of example, a schematic architectural diagram of another communication system according to an embodiment of the present application. Referring to FIG. 1B, a terminal device 120 and a satellite 130 are included, and wireless communication may be performed between the terminal device 120 and the satellite 130. The network formed between the terminal device 120 and the satellite 130 may also be referred to as an NTN. In the architecture of the communication system shown in FIG. 1B, the satellite 130 may have the function of a base station, and the terminal device 120 and the satellite 130 may communicate directly. In a system architecture, the satellite 130 may be referred to as a network device. In some embodiments of the present application, a plurality of network devices may be included in the communication system, and other number of terminal devices may be included in the coverage range of each network device, which is not limited in the embodiments of the present application.

For example, FIG. 1C is a schematic architectural diagram of another communication system according to an embodiment of the present application. Referring to FIG. 1C, a terminal device 120, a satellite 130, and a base station 140 are included, wireless communication may be performed between the terminal device 120 and the satellite 130, and communication may be performed between the satellite 130 and the base station 140. The network formed between the terminal device 120, the satellite 130, and the base station 140 may also be referred to as an NTN. In the architecture of the communication system shown in FIG. 1C, the satellite 130 may not have the function of a base station, and communication between the terminal device 120 and the base station 140 requires transit through the satellite 130. Under such a system architecture, the base station 140 may be referred to as a network device. In some embodiments of the present application, a plurality of network devices may be included in the communication system, and other number of terminal devices may be included in the coverage range of each network device, which is not limited in the embodiments of the present application.

In future evolving communication systems such as Beyond Fifth Generation (B5G) and Sixth Generation (6G) mobile communication systems, a Distributed Multiple-In Multiple-Out (Massive MIMO, also known as a Distributed antenna system) scenario and/or a Massive multiple-input multiple-output (Massive MIMO, also known as a Massive antenna matrix system) scenario may also be included. In some cases, Distributed MIMO and/or Massive MIMO may also support Cell-free or terminal (also referred to as User Equipment (UE)) -centric networking scenarios. It should be understood that the above scenario also applies to TN and/or NTN.

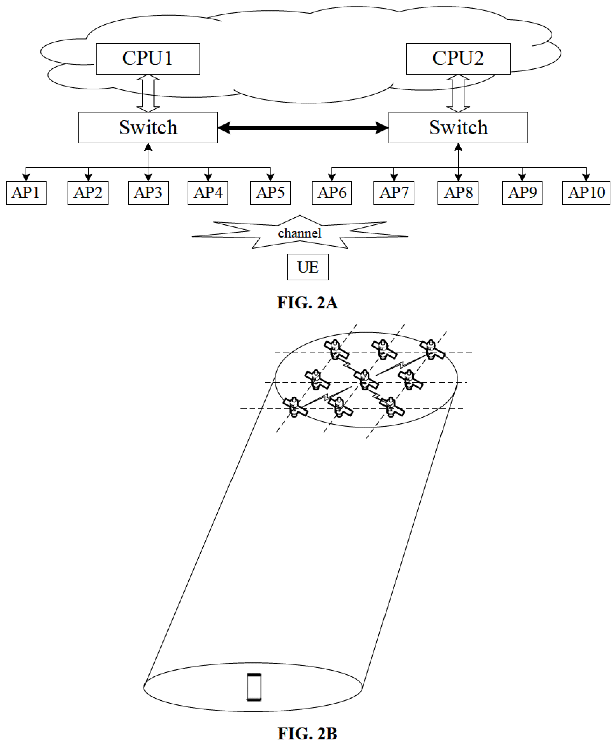

Exemplarily, FIG. 2A is a schematic architectural diagram of a communication system according to an embodiment of the present application, the system architecture includes a distributed antenna port (or a cluster of distributed antenna ports), and/or a Central Processing Unit (CPU), and/or a switch module. As shown in FIG. 2A, the communication system may include a plurality of distributed antenna ports (or clusters of distributed antenna ports), with different distributed antenna ports (or clusters of distributed antenna ports) connected to the CPU through a switching module. The terminal device selects an appropriate distributed antenna port (or cluster of distributed antenna ports) to serve it according to the location area in which it is located. FIG. 2A exemplarily illustrates two CPUs, two switching modules, ten distributed antenna ports, and one terminal device. In some embodiments of the present application, the communication system may include other numbers of CPUs, and/or other numbers of switching modules, and/or other numbers of distributed antenna ports (or clusters of distributed antenna ports), and/or other numbers of terminal devices, and the embodiments of the present application are not limited thereto.

Exemplarily, FIG. 2B is a schematic architectural diagram of another communication system according to an embodiment of the present application. Referring to FIG. 2B, a terminal device and a satellite cluster are included, and wireless communication may be performed between the terminal device and the satellite cluster. The network formed between the terminal device and the satellite cluster may also be referred to as an NTN. In the architecture of the communication system shown in FIG. 2B, at least one satellite in the satellite cluster (e.g., a satellite located at a central location) may have the function of a base station, and direct communication may be made between the terminal device and the satellite cluster. Under the system architecture, a satellite having a base station function can be referred to as a network device. In some embodiments of the present application, a plurality of satellite clusters may be included in the communication system, and/or each satellite cluster may include one or more network devices, and/or other numbers of terminal devices may be included in the coverage range of each satellite cluster or each network device, which is not limited in the embodiments of the present application.

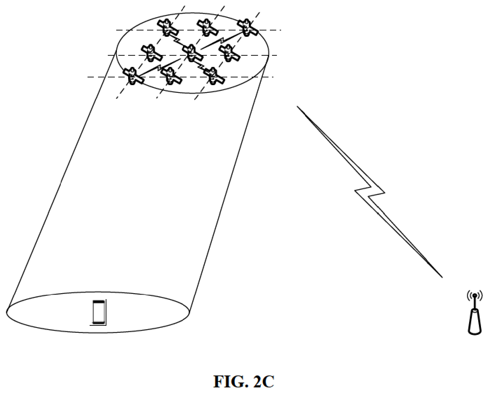

For example, FIG. 2C is a schematic architectural diagram of another communication system according to an embodiment of the present application. Referring to FIG. 2C, a terminal device, a satellite cluster, and a base station are included, wireless communication may be performed between the terminal device and the satellite cluster, and communication may be performed between the satellite cluster and the base station. The network formed between the terminal device, the satellite cluster, and the base station may also be referred to as an NTN. In the architecture of the communication system shown in FIG. 2C, the satellite cluster may not have the function of a base station, and communication between the terminal device and the base station needs to be transit through the satellite cluster. Under such a system architecture, the base station may be referred to as a network device. In some embodiments of the present application, the communication system may include a plurality of satellite clusters, and/or one network device may be associated with one or more satellite clusters, and/or a plurality of network devices may be included, and/or other number of terminal devices may be included in the coverage area of each network device, which is not limited in the embodiments of the present application.

### UCI and PUSCH Multiplexing Transmission in NR Systems

In the NR system, the transmission of the uplink PUSCH supports not only the DFT-S-OFDM waveform, but also the CP-OFDM waveform. However, the mapping rules of uplink control information (UCI) on Physical Uplink Shared Channel (PUSCH) are the same in both waveforms.

The types of UCI Information carried on the PUSCH include one or more of Hybrid Automatic Repeat request-ACKnowledgement (HARQ-ACK), Channel State Information (CSI) Part 1, CSI Part 2, Configured Grant-UCI (CG-UCI), HARQ-ACK, and CG-UCI. When the UCI information carried on the PUSCH includes both the HARQ-ACK and the CG-UCI, the HARQ-ACK and the CG-UCI are coded jointly. When the UCI information carried on the PUSCH does not simultaneously include the HARQ-ACK and the CG-UCI, the three parts of HARQ-ACK or CG-UCI, CSI Part 1, and CSI Part 2 are coded independently, and the purpose of this is to protect the transmission of UCI information with higher reliability requirements.

For the channel coding type used, the UCI is transmitted on the PUSCH using the same scheme as the UCI is transmitted on the PUCCH. That is, when the number of UCI bits is greater than or equal to 12 bits, a Polar code is used; when the number of UCI bits is less than or equal to 11 bits, channel coding of small block lengths is used.

Because the sequence length after channel coding cannot meet the requirements of all the actual mapping Resource elements (REs), it is necessary to adaptively adjust the bit sequence after channel coding by rate matching, so that it can be mapped on all the allocated RE. This process is realized by rate matching. For the rate matching of UCI transmitted on the PUSCH, it can be divided into two cases: the PUSCH carries uplink data and the PUSCH does not carry uplink data.

After channel coding and rate matching of the UCI, the bit sequence may be mapped onto a matrix having the same time domain and frequency domain size as the physical resources occupied by the PUSCH (each mapping unit in the matrix corresponds to one RE), and the number of bits mapped on each mapping unit is the number of bits corresponding to the modulation order of the modulation mode. The UCI adopts the same modulation mode as the data part. For example, when the modulation mode is Quadrature Phase Shift Keying (QPSK), 2 bits are mapped on each mapping unit; when the modulation mode is 16QAM (Quadrature Amplitude Modulation), 4 bits are mapped on each mapping unit; when the modulation mode is 64QAM, 6 bits are mapped on each mapping unit; when the modulation mode is 256QAM, 8 bits are mapped on each mapping unit. When the waveform of the uplink PUSCH transmission is a Cyclic Prefix Orthogonal Frequency Division Multiplexing (CP-OFDM) waveform, a modulation symbol obtained by modulating bits mapped on each mapping unit is mapped on a physical resource corresponding to the mapping unit. When the waveform of the uplink PUSCH transmission is a Discrete Fourier Transform-Spread-OFDM (DFT-S-OFDM) waveform, a modulation symbol is obtained by modulating bits mapped on each mapping unit, and the information obtained by performing a DFT operation on the modulation symbol on the mapping unit corresponding to each symbol in the matrix is mapped onto the physical resource corresponding to the symbol.

For a case where the number of bits of the HARQ-ACK information is less than or equal to 2 bits, the number of Reserved REs is first calculated based on the number of bits of the HARQ-ACK information being equal to 2, and the REs are reserved for possible transmission of the HARQ-ACK information. Considering that the number of bits of the CSI Part 1 is relatively small and the importance of transmission is high, in order to avoid the influence of punching on the CSI Part 1, the CSI Part 1 is prohibited from mapping on the reserved RE. Information other than the CSI Part 1 (a CSI Part 2 and data) can be mapped on the reserved RE. If there is HARQ-ACK information, the HARQ-ACK information is mapped to the reserved RE in a puncturing manner. In addition, in a case where there is no uplink data and the UCI information includes the CSI Part 1 but does not include the CSI Part 2, if the actual transmitted HARQ-ACK bits are less than 2 (for example, no HARQ-ACK bits or only 1 bit), it is necessary to assume that the HARQ-ACK bits are 2 bits, and the insufficient part needs to be filled by 0 to 2 bits, thereby filling the reserved RE and avoiding the occurrence of a blank RE without energy in the PUSCH (avoiding the non-transmission of the reserved RE), so as to ensure the low Peak-to-Average Power Ratio (PAPR) characteristic of the uplink single carrier when the DFT-S-OFDM waveform is used. At the time of mapping, if there is the CSI Part 1, starting from a data symbol after the first Demodulation Reference Signal (DMRS) symbol of the PUSCH, the CSI Part 1 is mapped with the principle of frequency-domain-first and the position of the reserved RE is skipped. Then, if there is the CSI Part 2, the CSI Part 2 is continuously mapped with the principle of frequency-domain-first. Then, if there is an Uplink Shared Channel (UL-SCH), the UL-SCH is continuously mapped with the principle of frequency-domain-first. Then if there is HARQ-ACK information, the HARQ-ACK information is mapped on the reserved RE in a puncturing manner.

In the case where the number of bits of the HARQ-ACK information is greater than 2, for both the HARQ-ACK and the CSI, the rate-matched bit sequence is mapped from the data symbol after the first DMRS of the PUSCH. At the time of mapping, the most important signal HARQ-ACK is immediately adjacent to the DMRS and mapped according to the principle of frequency-domain-first. Then, if there is the CSI Part 1, continue to map CSI Part 1 is continuously mapped with the principle of frequency-domain-first. Then, if there is the CSI Part 2, the CSI Part 2 is continuously mapped with the principle of frequency-domain-first. Finally, if there is the UL-SCH (i.e. uplink data), the UL-SCH is mapped with the principle of frequency-domain-first.

For each type of UCI, when it is mapped on a certain symbol, it is assumed that the number of subcarriers available for UCI mapping on the symbol is N, a number of subcarriers also required for the UCI to be mapped on the symbol is M. If M is greater than or equal to N, then the N subcarriers are all used for the mapping of the UCI. That is, the UCI is continuously mapped on the subcarriers of the symbol. If M is less than N, then M subcarriers of the N subcarriers are used for mapping of the UCI, where the M subcarriers are distributed equally spaced uniformly mapped subcarriers of the N subcarriers. As a special example, if M is less than N but M is greater than N/2, since the number of occupied subcarriers is greater than half of the total number of available subcarriers of the symbol, the M subcarriers are the first M subcarriers of the N subcarriers. That is, the UCI is still continuously mapped on the subcarriers of the symbol.

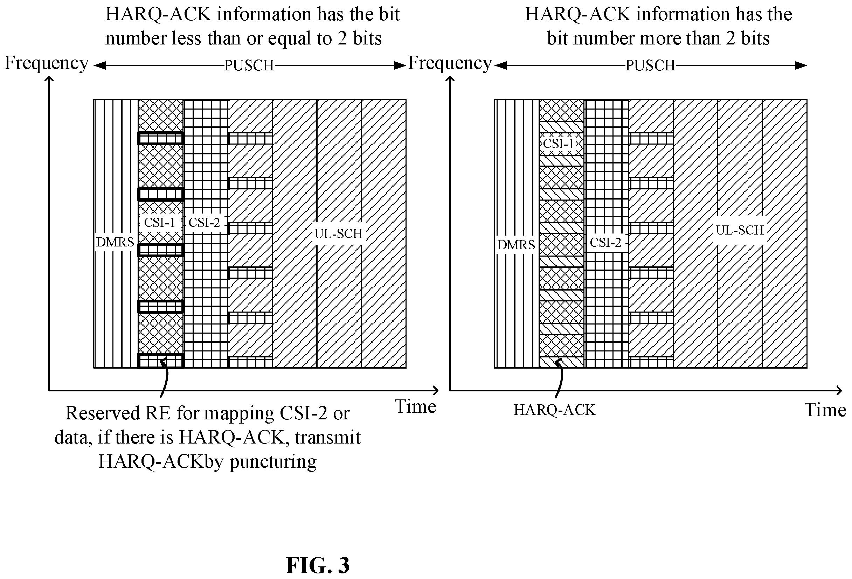

FIG. 3 is a schematic diagram of UCI and PUSCH multiplexing transmission according to an embodiment of the present application, which shows a schematic diagram of mapping of the UCI on a matrix corresponding to time-frequency domain resources occupied by PUSCH when the number of bits of HARQ-ACK information is less than or equal to 2 bits (that is, the number of the bits of the HARQ-ACK information is 0, 1 or 2 bits) and when the number of the bits of HARQ-ACK information is greater than 2 bits, in a case where the DMRS mapping Type is Type B.

### PUSCH transmission in NTN Systems

In an NTN system, in order to improve the uplink coverage of a cell, PUSCH is usually transmitted in a repetitive transmission manner. For example, a PUSCH is repeatedly transmitted N times in the time domain. Since a PUSCH needs to be repeatedly transmitted N times, the uplink resource occupied is N times that of the PUSCH without repeated transmission, which will lead to the reduction of the uplink capacity of the system. Therefore, in this scenario, in order to improve the uplink capacity of the NTN system, it is possible to support the transmission of the PUSCH in an Orthogonal Code (also known as Orthogonal Cover Code, OCC) spreading manner.

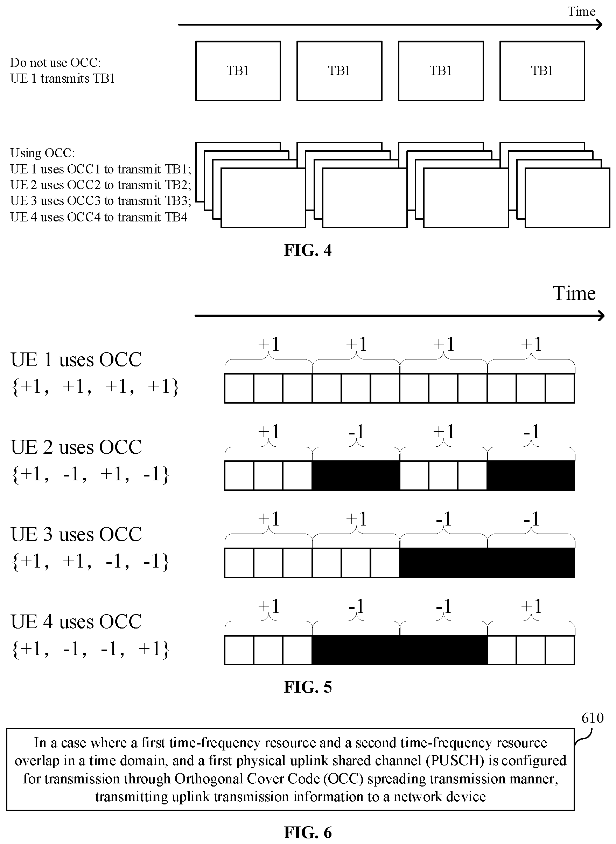

FIG. 4 is an example diagram of boosting uplink capacity by transmitting a PUSCH using the OCC according to an embodiment of the present application, and shows an example of boosting uplink capacity. In a case where the OCC is not used, it is assumed that the UE1 needs 4 repetitions to transmit the TB1 in order to meet the requirement of uplink coverage, the network device needs to allocate 4 resources to the TB1 of the UE1 for transmission. That is, the 4 resources serve one terminal device. In a case where the OCC is used, UE1 can use one OCC (for example, OCC1) to transmit TB1, UE2 can use one OCC (for example, OCC2) to transmit TB2, UE3 can use one OCC (for example, OCC3) to transmit TB3, and UE4 can use one OCC (for example, OCC4) to transmit TB4 on the four resources allocated by the network device. That is, the four resources can serve four terminal devices. The uplink transmission of different terminal devices are kept orthogonal by means of different OCCs, thereby achieving the purpose of enhancing uplink capacity while ensuring uplink coverage for the terminal devices.

In a communication system (such as an NTN) system, in a case where the terminal device transmits the PUSCH by using the OCC, when the terminal device needs to multiplex the UCI and the PUSCH for transmission, if a method for multiplexing the UCI and the PUSCH in the existing system is adopted, the orthogonality of the PUSCH transmitted by the terminal device may be affected, which degrades the performance of the PUSCH thereof.

Taking the size of symbols or slots included in an OCC spreading unit being one PUSCH, and the OCC set being {{+1, +1, +1, +1}, {+1, -1, +1, -1}, {+1, +1, -1, -1}, {+1, - 1, -1, +1}} as an example, it will describe that different terminal devices use different OCCs to perform PUSCH transmission on a same time domain and frequency domain resource.

FIG. 5 is an example diagram of a time domain OCC spreading according to an embodiment of the present application. As shown in FIG. 5, a same time domain and frequency domain resource is allocated to UE1, UE2, UE3, and UE4 for PUSCH transmission. For each UE of UE1, UE2, UE3, and UE4, a PUSCH includes 12 data symbols, where the k-th data symbol, the k +3rd data symbol, the k +6th data symbol, and the k +9th data symbol in the PUSCH carry same information, and k takes values of 0, 1, and 2. That is, the zero, third, sixth, and ninth symbols in the PUSCH are data symbols that are repeatedly transmitted, the first, fourth, seventh, and tenth symbols are data symbols that are repeatedly transmitted, and the second, fifth, eighth, and eleventh symbols are data symbols that are repeatedly transmitted.

The OCC used by UE1 is {+1, +1, +1, +1}, and all data symbols in the PUSCH transmitted by UE1 are scrambled using the OCC factor {+1}. The OCC used by the UE 2 is {+1, -1, +1, -1}, and the 0th, 1st, and 2nd data symbols in the PUSCH transmitted by the UE2 are scrambled by OCC factor {+1}, the 3rd, 4th, and 5th data symbols are scrambled by OCC factor {-1}, the 6th, 7th, and 8th data symbols are scrambled by OCC factor {+1}, and the 9th, 10th, and 11th data symbols are scrambled by OCC factor {-1}. The OCC used by the UE 3 is {+1, +1, -1, -1}, and the 0th, 1st, and 2nd data symbols in the PUSCH transmitted by the UE3 are scrambled by OCC factor {+1}, the 3rd, 4th, and 5th data symbols are scrambled by OCC factor {+1}, the 6th, 7th, and 8th data symbols are scrambled by OCC factor {-1}, and the 9th, 10th, and 11th data symbols are scrambled by OCC factor {-1}. The OCC used by the UE4 is {+1, -1, -1, +1}, and the 0th, 1st, and 2nd data symbols in the PUSCH transmitted by the UE4 are scrambled by OCC factor {+1}, the 3rd, 4th, and 5th data symbols are scrambled by OCC factor {-1}, the 6th, 7th, and 8th data symbols are scrambled by OCC factor {-1}, and the 9th, 10th, and 11th data symbols are scrambled by OCC factor {+1}.

When the UE 1 needs to multiplex the UCI on the PUSCH for transmission, if the UCI multiplexing mode shown in FIG. 5 is still adopted, for example, the UCI information is multiplexed on the 0th data symbol, the orthogonality of the PUSCH transmission performed by the UE1 using the OCC scheme is damaged or the UE1 can no longer perform the PUSCH transmission using the OCC mode, resulting in degradation of the PUSCH performance or degradation of the uplink capacity of the system.

In this regard, the scheme shown in the subsequent embodiments of the present application discloses a scheme for enhancing multiplexing transmission of UCI and PUSCH, so as to improve the performance of a terminal device when performing PUSCH transmission using OCC.

Reference is made to FIG. 6, which shows a flowchart of an uplink transmission method according to an embodiment of the present application. The method can be executed by a terminal device. The terminal device may be a terminal device in the aforementioned network architecture or a terminal device in other network architectures, and the present application is not limited thereto. The method may include at least part of the following operations:

In Operation 610, in a case where a first time-frequency resource and a second time-frequency resource overlap in a time domain, and a first physical uplink shared channel (PUSCH) corresponds to an Orthogonal Cover Code (OCC) spreading transmission manner for transmission, transmission processing is performed.

The transmission processing includes one or more of the following processing: transmitting information obtained by multiplexing first uplink control information (UCI) and a first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

In summary, in the scheme shown in the embodiment of the present application, when the first time-frequency resource for transmitting the PUSCH and the second time-frequency resource for transmitting the PUCCH overlap, the terminal device can control the transmission of the UCI corresponding to the PUCCH and the UL-SCH corresponding to the PUSCH. Specifically, it can transmit the UCI or the UL-SCH, or transmit the UCI and the UL-SCH after multiplexing, or not transmit the UCI/UL-SCH, thereby supporting the transmission of the UCI and/or the UL-SCH using or not using the OCC when the first time-frequency resource and the second time-frequency resource overlap in the time domain. Therefore, it is provided a scheme for enhancing the multiplexing transmission of the UCI and the PUSCH, thereby improving the performance of the terminal device when the PUSCH transmission is performed using the OCC.

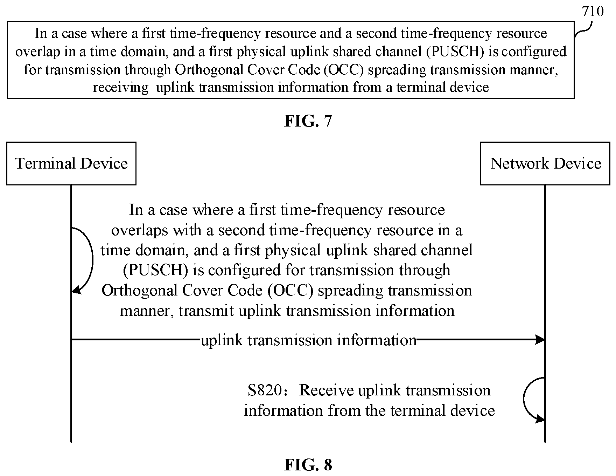

Please refer to FIG. 7, which shows a flowchart of an uplink transmission method according to an embodiment of the present application. The method can be executed by a network device. The network device may be a network device in the aforementioned network architecture or a network device in other network architectures, and the present application is not limited thereto. The method may include at least part of the following operations:

In Operation 710, in a case where a first time-frequency resource and a second time-frequency resource overlap in a time domain, and a first physical uplink shared channel (PUSCH) corresponds to an Orthogonal Cover Code (OCC) spreading transmission manner for transmission, uplink transmission information from a terminal device is received.

The uplink transmission information is transmitted by the terminal device when performing transmission processing. The transmission processing includes one or more of the following processing: transmitting information obtained by multiplexing first UCI and a first UL-SCH through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

That is, an operation that the information of the uplink transmission from the terminal device is received includes one or more of: receiving information obtained by multiplexing the first UCI and the first UL-SCH through the first time-frequency resource; receiving the first UCI through the first time-frequency resource; receiving the first UCI through the second time-frequency resource; or receiving the first UL-SCH through the first time-frequency resource.

The first time-frequency resource is a resource allocated by the network device to the terminal device for transmitting the first PUSCH, and the second time-frequency resource is a resource allocated by the network device to the terminal device for transmitting a first physical uplink control channel (PUCCH). The first UCI has a mapping relationship with the first PUCCH, and the first UL-SCH has a mapping relationship with the first PUSCH.

In summary, in the scheme shown in the embodiment of the present application, when the first time-frequency resource for transmitting the PUSCH and the second time-frequency resource for transmitting the PUCCH overlap, the terminal device can control the transmission of the UCI corresponding to the PUCCH and the UL-SCH corresponding to the PUSCH. Specifically, it can transmit the UCI or the UL-SCH, or transmit the UCI and the UL-SCH after multiplexing, or not transmit the UCI/UL-SCH, thereby supporting the transmission of the UCI and/or the UL-SCH using or not using the OCC when the first time-frequency resource and the second time-frequency resource overlap in the time domain. Therefore, it is provided a scheme for enhancing the multiplexing transmission of the UCI and the PUSCH, thereby improving the performance of the terminal device when the PUSCH transmission is performed using the OCC.

Referring to FIG. 8, which illustrates a flowchart of an uplink transmission method according to an embodiment of the present application, the method can be executed by a terminal device and a network device in an interactive manner. The terminal device may be a terminal device in the aforementioned network architecture, or may be a terminal device in another network architecture. The network device may be a network device in the aforementioned network architecture or a network device in another network architecture. The present application is not limited thereto. The method may include at least part of the following operations:

In Operation 810, the terminal device performs transmission processing in a case where a first time-frequency resource and a second time-frequency resource overlap in a time domain, and a first physical uplink shared channel (PUSCH) corresponds to an Orthogonal Cover Code (OCC) spreading transmission manner for transmission.

The transmission processing includes one or more of the following processing: transmitting information obtained by multiplexing first uplink control information (UCI) and a first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The network device receives information of uplink transmission from the terminal device in a case where a first time-frequency resource and a second time-frequency resource overlap in a time domain, and a first physical uplink shared channel (PUSCH) corresponds to an Orthogonal Cover Code (OCC) spreading transmission manner for transmission.

An operation that the information of the uplink transmission from the terminal device is received includes one or more of: receiving information obtained by multiplexing the first UCI and the first UL-SCH through the first time-frequency resource; receiving the first UCI through the first time-frequency resource; receiving the first UCI through the second time-frequency resource; or receiving the first UL-SCH through the first time-frequency resource.

The first time-frequency resource is a resource allocated by the network device to the terminal device for transmitting the first PUSCH, and the second time-frequency resource is a resource allocated by the network device to the terminal device for transmitting a first physical uplink control channel (PUCCH). The first UCI has a mapping relationship with the first PUCCH, and the first UL-SCH has a mapping relationship with the first PUSCH.

In the embodiments of the present application, when the first time-frequency resource and the second time-frequency resource overlap in the time domain, the first time-frequency resource is used for transmitting the first physical uplink shared channel (PUSCH), the second time-frequency resource is used for transmitting the first physical uplink control channel (PUCCH), and the first PUSCH corresponds to a transmission mode of Orthogonal Cover Code (OCC). At this time, the behaviors of the terminal device and the network device include one or more of the following:

The terminal device transmits the information obtained by multiplexing first uplink control information (UCI) and a first uplink shared channel (UL-SCH) through the first time-frequency resource, and the network device receives the information obtained by multiplexing first uplink control information (UCI) and a first uplink shared channel (UL-SCH) through the first time-frequency resource;

The terminal device transmits the first UCI through the first time-frequency resource, and the network device receives the first UCI through the first time-frequency resource;

The terminal device transmits the first UCI through the second time-frequency resource, and the network device receives the first UCI through the second time-frequency resource;

The terminal device transmits the first UL-SCH through the first time-frequency resource, and the network device receives the first UL-SCH through the first time-frequency resource;

The terminal device does not transmit the first UL-SCH through the first time-frequency resource, and the network device does not receive the first UL-SCH through the first time-frequency resource; and

The terminal device does not transmit the first UCI through the second time-frequency resource, and the network device does not receive the first UCI through the second time-frequency resource.

The first UCI has a mapping relationship with the first PUCCH, and the first UL-SCH has a mapping relationship with the first PUSCH.

In some embodiments, the above transmission processing includes one or more of:
transmitting, through the first time-frequency resource, the information obtained by multiplexing the first UCI and the first UL-SCH and not transmitting, through the second time-frequency resource, the first UCI; or ,
transmitting, through the first time-frequency resource, the first UCI and not transmitting, through the second time-frequency resource, the first UCI; or,
transmitting, through the second time-frequency resource, the first UCI and not transmitting, through the first time-frequency resource, the first UL-SCH; or
transmitting, through the second time-frequency resource, the first UCI and transmitting, through the first time-frequency resource, the first UL-SCH.

In some embodiments, the mapping relationship between the first UCI and the first PUCCH includes that: the first PUCCH is used for transmitting the first UCI; or, the first UCI is mapped onto the first PUCCH; or, the first UCI includes a UCI mapped onto the first PUCCH when the first time-frequency resource and the second time-frequency resource do not overlap in a time domain, that is, the first UCI is mapped to the first PUCCH when the first time-frequency resource and the second time-frequency resource do not overlap in the time domain; or,
the first UCI includes a UCI to be mapped to the first PUCCH without considering overlapping of the first time-frequency resource and the second time-frequency resource in a time domain, that is when the first time-frequency resource and the second time-frequency resource overlap in the time domain, the first UCI includes a UCI originally to be mapped onto the first PUCCH.

In some embodiments, the mapping relationship between the first UL-SCH and the first PUSCH includes that: the first PUSCH is used to transmit the first UL-SCH; or, the first UL-SCH is mapped onto the first PUSCH.

The first UL-SCH has a mapping relationship with the first PUSCH, which may mean that the first UL-SCH is mapped to the first PUSCH.

In some embodiments, the operation of transmitting the information obtained by multiplexing the first UCI and the first UL-SCH through the first time-frequency resource includes an operation of transmitting the information obtained by multiplexing the first UCI and the first UL-SCH through the first time-frequency resource in a case where a UL-SCH is carried on the first PUSCH;

The operation of transmitting the first UCI through the first time-frequency resource includes an operation of transmitting the first UCI through the first time-frequency resource in a case where a first UL-SCH is not carried on the first PUSCH.

That is, when the first time-frequency resource and the second time-frequency resource overlap in the time domain, if the first UL-SCH is carried on the first PUSCH (that is, the first UL-SCH has a mapping relationship with the first PUSCH), the terminal device transmits the information obtained by multiplexing the first UCI and the first UL-SCH through the first time-frequency resource, or if the UL-SCH is not carried on the first PUSCH, the terminal device transmits the first UCI through the first time-frequency resource.

In some embodiments, when the first time-frequency resource and the second time-frequency resource overlap in the time domain, the terminal device transmits the information obtained by multiplexing the first UCI and the first UL-SCH through the first time-frequency resource.

In some embodiments, when the information obtained by multiplexing the first UCI and the first UL-SCH is transmitted through the first time-frequency resource, the first UCI corresponds to the OCC spreading transmission manner, and the first UL-SCH corresponds to the OCC spreading transmission manner. Alternatively, when the first UCI is transmitted through the first time-frequency resource, the first UCI corresponds to the OCC spreading transmission manner.

In some embodiments, the OCC spreading transmission manner corresponding to the first UCI is the same as the OCC spreading transmission manner corresponding to the first PUSCH; and/or the OCC spreading transmission manner corresponding to the first UL-SCH is the same as the OCC spreading transmission manner corresponding to the first PUSCH.

In some embodiments, when the information obtained by multiplexing the first UCI and the first UL-SCH is transmitted through the first time-frequency resource, the first UCI does not correspond to the OCC spreading transmission manner, and the first UL-SCH does not correspond to the OCC spreading transmission manner; or, when the first UCI is transmitted through the first time-frequency resource, the first UCI does not correspond to the OCC spreading transmission manner.

In some embodiments, when the information obtained by multiplexing the first UCI and the first UL-SCH is transmitted through the first time-frequency resource, the first PUSCH does not correspond to the OCC spreading transmission manner, or the first PUSCH corresponds to the OCC spreading transmission manner.

In the above embodiment, the terminal device transmits the information obtained by multiplexing the first UCI and the first UL-SCH through the first time-frequency resource, herein the first PUSCH does not correspond to the OCC spreading transmission manner. That is, when the first time-frequency resource and the second time-frequency resource overlap in the time domain, if the terminal device transmits the information obtained by multiplexing the first UCI and the first UL-SCH through the first time-frequency resource, the first UL-SCH no longer uses the OCC spreading transmission manner, or the configuration information for using the OCC spreading transmission is not applied to a scenario in which the UCI and the UL-SCH are multiplexed and transmitted.

Alternatively, in the above embodiment, the terminal device transmits the information obtained by multiplexing the first UCI and the first UL-SCH through the first time-frequency resource, herein the first UCI corresponds to the OCC spreading transmission manner. That is, when the first time-frequency resource and the second time-frequency resource overlap in the time domain, if the terminal device transmits the information obtained by multiplexing the first UCI and the first UL-SCH through the first time-frequency resource, the first UCI also uses the OCC spreading transmission manner, or the configuration information for using the OCC spreading transmission is also applied to a scenario in which the UCI and the UL-SCH are multiplexed and transmitted.

In some embodiments, when the first UCI is transmitted through the first time-frequency resource, the first UCI does not correspond to the OCC spreading transmission manner, or the first UCI corresponds to the OCC spreading transmission manner.

In the above embodiment, the terminal device transmits the first UCI through the first time-frequency resource, herein the first UCI does not correspond to the OCC spreading transmission manner. That is, when the first time-frequency resource and the second time-frequency resource overlap in the time domain, in a case where the UL-SCH is not carried on the first PUSCH, if the terminal device transmits the first UCI through the first time-frequency resource, the first UCI does not use the OCC spreading transmission manner, or the configuration information for using the OCC spreading transmission is not applied to a scenario in which the UCI is transmitted through the first PUSCH.

Alternatively, in the above embodiment, the terminal device transmits the first UCI through the first time-frequency resource, herein the first UCI corresponds to the OCC spreading transmission manner. That is, when the first time-frequency resource and the second time-frequency resource overlap in the time domain, in a case where the UL-SCH is not carried on the first PUSCH, if the terminal device transmits the first UCI through the first time-frequency resource, the first UCI also uses the OCC spreading transmission manner, or the configuration information for using the OCC spreading transmission is also applied to a scenario in which the UCI is transmitted through the first PUSCH.

In some embodiments, when the first PUSCH corresponds to the OCC spreading transmission manner, the first UL-SCH corresponds to the OCC spreading transmission manner; and/or, when the first PUSCH does not correspond to the OCC spreading transmission manner, the first UL-SCH does not correspond to the OCC spreading transmission manner.

In the above embodiment, the first PUSCH corresponds to the OCC spreading transmission manner, which includes that: the first UL-SCH corresponds to the OCC spreading transmission manner; and/or the first PUSCH does not correspond to the OCC spreading transmission manner, which includes that: the first UL-SCH does not correspond to the OCC spreading transmission manner.

In some embodiments, the OCC spreading transmission manner corresponding to the first PUSCH includes one of the following: a symbol-based OCC spreading transmission manner; a slot-based OCC spreading transmission manner; a mapping block-based OCC spreading transmission manner; a symbol-and-mapping block-based OCC spreading transmission manner; or a slot-and-mapping block-based OCC spreading transmission manner.

In some embodiments, the OCC spreading transmission manner corresponding to the first PUSCH includes one of the following: a manner of performing the OCC spreading transmission in one PUSCH; and a manner of performing the OCC spreading transmission among a plurality of PUSCHs.

In some embodiments, the first PUSCH corresponds to the manner of performing the OCC spreading transmission in one PUSCH, which includes that: a manner in which the first PUSCH performs the OCC spreading transmission among a plurality of symbols in one PUSCH; or, a manner in which the first PUSCH performs the OCC spreading transmission in one symbol.

In some embodiments, the first PUSCH corresponds to the manner of performing the OCC spreading transmission among a plurality of PUSCHs, which includes a manner in which the first PUSCH performs the OCC spreading transmission among a plurality of PUSCHs in one or more slots.

In some embodiments, the manner of performing the OCC spreading transmission in one PUSCH includes one of: a symbol-based OCC spreading transmission manner; mapping block-based OCC spreading transmission manner; a symbol-and-mapping block-based OCC spreading transmission manner.

In some embodiments, the manner of performing the OCC spreading transmission among a plurality of PUSCHs includes one of: a slot-based OCC spreading transmission manner; or a slot-and-mapping block-based OCC spreading transmission manner.

In some embodiments, the slot-based OCC spreading transmission manner method may be replaced with a manner of performing the OCC spreading transmission among a plurality of PUSCHs.

In some embodiments, the symbol-based OCC spreading transmission manner may be replaced by a manner of performing the OCC spreading transmission among a plurality of symbols in one PUSCH, or a manner of performing the OCC spreading transmission in one PUSCH.

In some embodiments, the mapping block-based OCC spreading transmission manner may be replaced by a manner of performing the OCC spreading transmission in one symbol or a manner of performing the OCC spreading transmission in one PUSCH.

In some embodiments, when the first UL-SCH corresponds to the OCC spreading transmission manner, the first UL-SCH corresponds to a time domain unit-based OCC spreading transmission manner, the time domain unit includes a symbol or a slot; or, the first UL-SCH corresponds to a mapping block-based OCC spreading transmission manner; or, the first UL-SCH corresponds to a time domain unit and mapping block-based OCC spreading transmission manner.

In the above embodiment, the time domain unit may be a symbol or a slot, that is, the first UL-SCH corresponds to the OCC spreading transmission manner, which includes that: the first UL-SCH corresponds to a symbol or slot-based OCC spreading transmission manner, or the first UL-SCH corresponds to a mapping block-based OCC spreading transmission manner, or the first UL-SCH corresponds to a symbol/slot-and-mapping block-based OCC spreading transmission manner.

In some embodiments, when the first UCI corresponds to the OCC spreading transmission manner, the first UCI corresponds to a time domain unit-based OCC spreading transmission manner; or, the first UCI corresponds to a mapping block-based OCC spreading transmission manner; or, the first UCI corresponds to a time domain unit and mapping block-based OCC spreading transmission manner.

In the above embodiment, the first UCI corresponds to the OCC spreading transmission manner, which includes that: the first UCI corresponds to a symbol/slot-based OCC spreading transmission manner, or the first UCI corresponds to a mapping block-based OCC spreading transmission manner, or the first UCI corresponds to a symbol/slot-and-mapping block-based OCC spreading transmission manner.

In some embodiments, the OCC spreading transmission manner corresponding to the first UCI is determined according to the OCC spreading transmission manner corresponding to the first UL-SCH; or, the OCC spreading transmission manner corresponding to the first UCI is the same as the OCC spreading transmission manner corresponding to the first UL-SCH.

For example, if the first UL-SCH corresponds to a symbol or slot-based OCC spreading transmission manner, then the first UCI also corresponds to a symbol or slot-based OCC spreading transmission manner. For another example, if the first UL-SCH corresponds to a mapping block-based OCC spreading transmission manner, the first UCI also corresponds to a mapping block-based OCC spreading transmission manner. For another example, if the first UL-SCH corresponds to a symbol-and-mapping block-based OCC spreading transmission manner, the first UCI also corresponds to a symbol-and-mapping block-based OCC spreading transmission manner.

In some embodiments, the OCC corresponding to the first UCI is determined according to the OCC corresponding to the first UL-SCH; or, the OCC corresponding to the first UCI is the same as the OCC corresponding to the first UL-SCH.

In some embodiments, when the first time-frequency resource and the second time-frequency resource overlap in the time domain, the terminal device transmits the first UCI through the second time-frequency resource, and the terminal device does not transmit the first UL-SCH through the first time-frequency resource. That is, when the first PUSCH and the first PUCCH overlap in the time domain, the terminal device transmits the first PUCCH and does not transmit the first PUSCH.

In some embodiments, when the first time-frequency resource and the second time-frequency resource overlap in the time domain, the terminal device transmits the first UCI through the second time-frequency resource, and the terminal device transmits the first UL-SCH through the first time-frequency resource. That is, when the first PUSCH and the first PUCCH overlap in the time domain, the terminal device transmits both the first PUCCH and the first PUSCH.

In some embodiments, when the first PUSCH corresponds to the OCC spreading transmission manner, the method further includes that: the OCC spreading transmission manner corresponding to the first PUSCH is determined according to first configuration information transmitted by the network device. Accordingly, before this, the network device may transmit the first configuration information to the terminal device.

In the above embodiment, the first PUSCH corresponds to the OCC spreading transmission manner, which includes that: the terminal device determines that the first PUSCH corresponds to the OCC spreading transmission manner, according to the first configuration information transmitted by the network device. For example, the first configuration information is used to configure that the OCC spreading transmission manner is enabled for transmitting the PUSCH. When the terminal device determines to transmit the first UL-SCH through the first PUSCH, the first PUSCH corresponds to the OCC spreading transmission manner, that is, the first UL-SCH corresponds to the OCC spreading transmission manner.

In some embodiments, the first configuration Information is carried in at least one of a system message, a Radio Resource Control (RRC) message, a Media Access Control (MAC) Control Element (CE), and Downlink Control Information (DCI).

In some embodiments, the OCC spreading transmission manner corresponding to the first PUSCH is determined according to the first configuration information. That is, after it is determined that the first PUSCH corresponds to the OCC spreading transmission, which OCC spreading transmission manner is used specifically for transmitting the first PUSCH is also determined according to the first configuration information.

In some embodiments, the OCC spreading transmission manner corresponding to the first PUSCH is predefined. That is, after it is determined that the first PUSCH corresponds to the OCC spreading transmission, which OCC spreading transmission manner is used specifically for transmitting the first PUSCH is predefined. For example, the OCC spreading transmission manner corresponding to the PUSCH may be predefined by protocol.

In some embodiments, the first UCI includes one or more of: HARQ-ACK, CSI Part 1, CSI Part 2, CG-UCI.

In some embodiments, the first UCI includes one or more of information that the HARQ-ACK is independently encoded, information that the CSI Part 1 is independently encoded, information that the CSI Part 2 is independently encoded, information that the CG-UCI is independently encoded, and information that the HARQ-ACK and CG-UCI are jointly encoded.

In some embodiments, where the UL-SCH is carried on the first PUSCH, the first UCI includes one or more of: HARQ-ACK, CSI Part 1, CSI Part 2, CG-UCI.

When the first UCI includes both the HARQ-ACK and the CG-UCI, the HARQ-ACK and the CG-UCI are coded jointly.

When the first UCI does not simultaneously include the HARQ-ACK and the CG-UCI, the HARQ-ACK or the CG-UCI is independently encoded.

When the first UCI includes the CSI Part 1, the CSI Part 1 is independently encoded.

When the first UCI includes the CSI Part 2, the CSI Part 2 is independently encoded.

In some embodiments, where the first PUSCH does not carry a UL-SCH, the first UCI includes one or more of: HARQ-ACK, CSI Part 1, CSI Part 2. Herein,
when the first UCI includes the HARQ-ACK, the HARQ-ACK is independently encoded;
when the first UCI includes the CSI Part 1, the CSI Part 1 is independently encoded;
when the first UCI includes the CSI Part 2, the CSI Part 2 is independently encoded.

In some embodiments, the operation that the information obtained by multiplexing the first UCI and the first UL-SCH is transmitted through the first time-frequency resource includes operations that: a bit sequence is mapped onto mapping units of a first matrix. Herein the bit sequence includes a first bit sequence and a second bit sequence, the first bit sequence includes a bit sequence corresponding to the first UCI, and the second bit sequence includes a bit sequence corresponding to the first UL-SCH. Herein the number of rows of mapping units included in the first matrix is determined according to the number of subcarriers used for transmitting the first UCI and the first UL-SCH in the first time-frequency resource; the number of columns of mapping units included in the first matrix is determined according to the number of symbols used for transmitting the first UCI and the first UL-SCH in the first time-frequency resource.

In some embodiments, the operation that the first UCI is transmitted through the first time-frequency resource includes operations that: a bit sequence is mapped onto mapping units of a first matrix. Herein the bit sequence includes a first bit sequence, and the first bit sequence includes a bit sequence corresponding to the first UCI. Herein the number of rows of mapping units included in the first matrix is determined according to the number of subcarriers used for transmitting the first UCI in the first time-frequency resource; the number of columns of mapping units included in the first matrix is determined according to the number of symbols used for transmitting the first UCI in the first time-frequency resource.

In some embodiments, the operation that the bit sequence is mapped onto the mapping units of the first matrix includes at least one of:
in a case where the OCC spreading transmission manner corresponding to the first PUSCH includes a symbol-based OCC spreading transmission manner, in mapping units in a same row of the first matrix corresponding to symbols included in at least one OCC spreading unit, a same bit sequence is mapped onto mapping units of different columns which are spread using different OCC factors in a first OCC;
in a case where the OCC spreading transmission manner corresponding to the first PUSCH includes a slot-based OCC spreading transmission manner, in mapping units of multiple first matrixes corresponding to slots included in at least one OCC spreading unit, a same bit sequence is mapped onto mapping units of different first matrixes which are spread using different OCC factors in a first OCC; or
in a case where the OCC spreading transmission manner corresponding to the first PUSCH includes a mapping block-based OCC spreading transmission manner, in mapping units of a same column of a first matrix corresponding to a mapping blocks included in at least one OCC spreading unit, a same bit sequence is mapped onto mapping units of different rows which are spread using different OCC factors in a first OCC;
herein the first OCC is an OCC corresponding to the first PUSCH.

In some embodiments, the operation that the bit sequence is mapped onto the mapping units of the first matrix includes at least one of:
in a case where the OCC spreading transmission manner corresponding to the first PUSCH includes a symbol-based OCC spreading transmission manner, in mapping units in a same row of the first matrix corresponding to symbols included in each OCC spreading unit, a same bit sequence is mapped onto mapping units in different columns which are spread using different OCC factors in a first OCC;
in a case where the OCC spreading transmission manner corresponding to the first PUSCH includes a slot-based OCC spreading transmission manner, in mapping units of multiple first matrixes corresponding to slots included in each OCC spreading unit, a same bit sequence is mapped onto mapping units of different first matrixes which are spread using different OCC factors in a first OCC; or
in a case where the OCC spreading transmission manner corresponding to the first PUSCH includes a mapping block-based OCC spreading transmission manner, in mapping units in a same column of a first matrix corresponding to a mapping blocks included in each OCC spreading unit, a same bit sequence is mapped onto mapping units in different rows which are spread using different OCC factors in a first OCC;
herein the first OCC is an OCC corresponding to the first PUSCH.

In some embodiments, the method further includes at least one of the following operations:
bits mapped onto each mapping unit of the first matrix are modulated to obtain a modulation symbol;
each modulation symbol is spread using a corresponding OCC factor in the first OCC;
information obtained by performing a DFT operation on spread modulation symbols on each column of mapping units in the first matrix are mapped onto a resource, corresponding to the column, in the first time-frequency resource;
herein the first OCC is an OCC corresponding to the first PUSCH.

In some embodiments, the above method further includes at least one of the following operations:
bits mapped onto each mapping unit of the first matrix are modulated to obtain a modulation symbol;
information obtained by performing a DFT operation on modulation symbols on each column of mapping units in the first matrix is mapped onto, a resource corresponding to the column, in the first time-frequency resource;
each symbol in the first time-frequency resource is spread using a corresponding OCC factor in the first OCC;
herein the first OCC is an OCC corresponding to the first PUSCH.

In some embodiments, the above method further includes at least one of the following operations:
bits mapped onto each mapping unit of the first matrix are modulated to obtain a modulation symbol;
each modulation symbol is spread using a corresponding OCC factor in the first OCC;
the spread modulation symbols on each mapping unit in the first matrix are mapped onto a resource corresponding to the mapping unit in the first time-frequency resource
herein the first OCC is an OCC corresponding to the first PUSCH.

In some embodiments, in a case where the first UCI is transmitted through the first time-frequency resource, or the first UL-SCH is transmitted through the first time-frequency resource, or the information obtained by multiplexing the first UCI and the first UL-SCH is transmitted through the first time-frequency resource, the method may include one or more of the following operations: a first bit sequence and/or a second bit sequence is mapped onto mapping units of the first matrix; bits mapped on each mapping unit of the first matrix are modulated to obtain modulation symbols; each modulation symbol is spread using a corresponding OCC factor; information obtained by performing a DFT operation on the spread modulation symbol on the mapping unit in the first matrix corresponding to each symbol is mapped onto a resource corresponding to the symbol in the first time-frequency resource; herein the first bit sequence includes a bit sequence corresponding to the first UCI, and the second bit sequence includes a bit sequence corresponding to the first UL-SCH.

In other embodiments, in a case where the first UCI is transmitted through the first time-frequency resource, or the first UL-SCH is transmitted through the first time-frequency resource, or the information obtained by multiplexing the first UCI and the first UL-SCH is transmitted through the first time-frequency resource, the method may include one or more of the following operations: a first bit sequence and/or a second bit sequence are mapped on mapping units of the first matrix; bits mapped on each mapping unit are modulated to obtain modulation symbols; each modulation symbol are spread using a corresponding OCC factor; the spread modulation symbols each mapping unit in the first matrix are mapped onto a RE corresponding to the mapping unit in the first time-frequency resource; herein the first bit sequence includes a bit sequence corresponding to the first UCI, and the second bit sequence includes a bit sequence corresponding to the first UL-SCH.

In some embodiments, the number of rows included in the first matrix is determined according to the number of subcarriers in the first time-frequency resource used to transmit the first UCI and the first UL-SCH, the number of columns included in the first matrix is determined according to the number of symbols used for transmitting the first UCI and the first UL-SCH in the first time-frequency resource. Alternatively, a mapping unit of the first matrix correspond to a RE for transmitting the first UCI and the first UL-SCH in the first time-frequency resource. The number of bits mapped on each mapping unit is determined according to the modulation order of the modulation symbol.

For example, in Embodiment 1, the operation that the terminal device transmits the information obtained by multiplexing the first UCI and/or the first UL-SCH through the first time-frequency resource includes at least one of the following operations: a first bit sequence and/or a second bit sequence are mapped on mapping units of a first matrix; bits mapped on each mapping unit are modulated to obtain modulation symbols; each modulation symbol is spread using a corresponding OCC factor; information obtained by performing a DFT operation on the spread modulation symbol on the mapping unit in the first matrix corresponding to each symbol is mapped onto a resource corresponding to the symbol in the first time-frequency resource; the information obtained by multiplexing the first UCI and the first UL-SCH is transmitted through the first time-frequency resource; herein the first bit sequence includes a bit sequence corresponding to the first UCI, and the second bit sequence includes a bit sequence corresponding to the first UL-SCH.

In Embodiment 1, the number of rows included in the first matrix is determined according to the number of subcarriers used for transmitting the first UCI and the first UL-SCH in the first time-frequency resource, and the number of columns included in the first matrix is determined according to the number of symbols used for transmitting the first UCI and the first UL-SCH in the first time-frequency resource. Alternatively, a mapping unit of the first matrix corresponds to a RE for transmitting the first UCI and the first UL-SCH in the first time-frequency resource.

In Embodiment 1, the number of bits mapped on each mapping unit is determined according to the modulation order of the modulation symbol.

The order of the spreading operation and the DFT operation described above may be switched. For example, in Embodiment 2, the operation that the terminal device transmits the information obtained by multiplexing the first UCI and/or the first UL-SCH through the first time-frequency resource, includes at least one of the following operations: a first bit sequence and/or a second bit sequence are mapped onto mapping units of a first matrix; bits mapped on each mapping unit are modulated to obtain modulation symbols; information obtained by performing a DFT operation on a modulation symbol on a mapping unit in a first matrix corresponding to each symbol is mapped onto a resource corresponding to the symbol in a first time-frequency resource; each symbol is spread using a corresponding OCC factor; information obtained by multiplexing the first UCI and the first UL-SCH is transmitted through a first time-frequency resource; herein the first bit sequence includes a bit sequence corresponding to the first UCI, and the second bit sequence includes a bit sequence corresponding to the first UL-SCH.

In Embodiment 2, the number of bits mapped on each mapping unit is determined according to the modulation order of the modulation symbol.

In Embodiment 2, when the waveform of the uplink PUSCH transmission is a DFT-S-OFDM waveform, the terminal device maps a bit sequence corresponding to the first UCI and a bit sequence corresponding to the first UL-SCH on mapping units of a first matrix determined according to a resource size for transmitting the first UCI and the first UL-SCH in a first time-frequency resource, bits mapped on each mapping unit are modulated to obtain modulation symbols, each modulation symbol is spread using a corresponding OCC factor, and information obtained by performing the DFT operation on the spread modulation symbol on a mapping unit corresponding to each symbol in the first matrix is mapped onto a physical resource corresponding to the symbol for transmission.

For another example, in Embodiment 3, the operation that the terminal device transmits the information obtained by multiplexing the first UCI and/or the first UL-SCH through the first time-frequency resource includes at least one of the following operations: a first bit sequence and/or a second bit sequence are mapped onto mapping units of a first matrix; bits mapped on each mapping unit is modulated to obtain modulation symbols; each modulation symbol is spread using a corresponding OCC factor; the spread modulation symbol on each mapping unit in the first matrix is mapped to a RE corresponding to the mapping unit in the first time-frequency resource; the information obtained by multiplexing the first UCI and the first UL-SCH is transmitted through the first time-frequency resource; herein the first bit sequence includes a bit sequence corresponding to the first UCI, and the second bit sequence includes a bit sequence corresponding to the first UL-SCH.

In Embodiment 3, the number of rows included in the first matrix is determined according to the number of subcarriers used for transmitting the first UCI and the first UL-SCH in the first time-frequency resource, and the number of columns included in the first matrix is determined according to the number of symbols used for transmitting the first UCI and the first UL-SCH in the first time-frequency resource. Alternatively, a mapping unit of the first matrix corresponds to a RE for transmitting the first UCI and the first UL-SCH in the first time-frequency resource.

In Embodiment 3, the number of bits mapped on each mapping unit is determined according to the modulation order of the modulation symbol.

For example, in Embodiment 3, when the waveform of uplink PUSCH transmission is a CP-OFDM waveform, the terminal device maps a bit sequence corresponding to the first UCI and a bit sequence corresponding to the first UL-SCH on mapping units in a first matrix determined according to a resource size for transmitting the first UCI and the first UL-SCH in a first time-frequency resource, the bits mapped on each mapping unit is modulated to obtain a modulation symbol, each modulation symbol is spread using a corresponding OCC factor, and the spread modulation symbol on each mapping unit in the first matrix is mapped onto a RE corresponding to the mapping unit for transmission.

It will be understood that the DFT operation of the terminal device is applied to a case where the waveform of the uplink PUSCH transmission is a DFT-S-OFDM waveform. For example, Embodiment 1 and Embodiment 2. When the waveform of the uplink PUSCH transmission is a CP-OFDM waveform, the terminal device does not need to perform a DFT operation. For example, Embodiment 3.

In some embodiments, the symbol-based OCC spreading transmission manner includes: in a matrix corresponding to symbols included in an OCC spreading unit, mapping units corresponding to a same frequency domain position, a same modulation symbol on the mapping units corresponding to different time domain positions is spread using different OCC factors in the OCC.

In some embodiments, the slot-based OCC spreading transmission manner includes: in a matrix corresponding to slots included in the OCC spreading unit, in mapping units corresponding to a same frequency domain position, a same modulation symbol on mapping units corresponding to different time domain positions is spread using different OCC factors in the OCC.

In the above embodiment, the symbols/slots-based OCC spreading transmission manner includes that: in a matrix corresponding to symbols or slots included in the OCC spreading unit, in mapping units corresponding to a same frequency domain position (for example, a same subcarrier), a same modulation symbol on mapping units corresponding to different time domain positions (for example, different symbols) is spread using different OCC factors in the OCC.

In some embodiments, the mapping block-based OCC spreading transmission manner includes that: in a matrix corresponding to a mapping block included in an OCC spreading unit, in mapping units corresponding to a same time domain position, a same modulation symbol on mapping units corresponding to different frequency domain positions is spread using different OCC factors in the OCC.

In the above embodiment, the mapping block-based OCC spreading transmission manner includes that: in a matrix corresponding to a mapping block included in an OCC spreading unit, in mapping units corresponding to a same time domain position (for example, a same symbol), a same modulation symbol on mapping units corresponding to different frequency domain positions (for example, different subcarriers) is spread using different OCC factors in the OCC.

In some embodiments, the symbol-and-mapping block-based OCC spreading transmission manner includes that: in a matrix corresponding to symbols included in an OCC spreading unit, in mapping units corresponding to a same frequency domain position, a same modulation symbol on mapping units corresponding to different time domain positions is spread using different OCC factors in the OCC; in a matrix corresponding to a mapping block included in an OCC spreading unit, in mapping units corresponding to a same time domain position, a same modulation symbol on the mapping units corresponding to different frequency domain positions is spread using different OCC factors in the OCC.

In some embodiments, a slot-and-mapping block-based OCC spreading transmission manner includes that: in a matrix corresponding to slots included in an OCC spreading unit, in mapping units corresponding to a same frequency domain position, a same modulation symbol on mapping units corresponding to different time domain positions is spread using different OCC factors in the OCC; in a matrix corresponding to a mapping block included in an OCC spreading unit, in mapping units corresponding to a same time domain position, a same modulation symbol on mapping units corresponding to different frequency domain positions is spread using different OCC factors in the OCC.

In the above embodiment, the symbol-and-mapping block-based OCC spreading transmission manner includes that: in a matrix corresponding to symbols or slots included in an OCC spreading unit, in mapping units corresponding to a same frequency domain position (for example, a same subcarrier), a same modulation symbol on mapping units corresponding to different time domain positions (for example, different symbols) is spread using different OCC factors in the OCC. In a matrix corresponding to a mapping block included in an OCC spreading unit, in mapping units corresponding to a same time domain position (for example, a same symbol), a same modulation symbol on mapping units corresponding to different frequency domain positions (for example, different subcarriers) is spread using different OCC factors in the OCC.

In some embodiments, in a case where the OCC spreading transmission manner corresponding to the first PUSCH includes a symbol/slot-based OCC spreading transmission manner, an OCC spreading unit includes a minimum time domain unit which is spread using different OCC factors in the first OCC; and/or in a case where the OCC spreading transmission manner corresponding to the first PUSCH includes a mapping block-based OCC spreading transmission manner, an OCC spreading unit includes a minimum mapping block unit which is spread using different OCC factors in the first OCC.

In other words, in a case where the OCC spreading transmission manner corresponding to the first PUSCH includes a symbol or slot-based OCC spreading transmission manner, symbols or slots included in an OCC spreading unit include a minimum symbol set or a minimum slot set which are spread using different OCC factors in a first OCC. In a case where the OCC spreading transmission manner corresponding to the first PUSCH includes a mapping block-based OCC spreading transmission manner, a mapping block included in an OCC spreading unit includes a set of minimum mapping blocks which are spread using different OCC factors in a first OCC.

In some embodiments, the number of time domain units included by an OCC spreading unit corresponds to one of: M PUSCHs, M is an integer multiple of N, N is the OCC length; 1 PUSCH; M data symbols, M is an integer multiple of N, and N is the OCC length.

In some embodiments, a size of a mapping block included in an OCC spreading unit corresponds to one of: a Physical Resource Block (PRB) occupied by the first PUSCH transmission; 1 PRB; 1 resource block Group (RB Group, RBG).

In some embodiments, the first time-frequency resource includes time domain units included in an integer number of OCC spreading units; or, time domain units included in one OCC spreading unit includes a plurality of first time domain resources. Herein a time domain unit is a symbol or a slot.

That is, the time domain units included in the first time-frequency resource includes time domain units included in an integer number of OCC spreading units; or, the time domain units included in one OCC spreading unit includes time domain units included in a plurality of first time domain resources.

For example, the first time-frequency resource includes symbols or slots included in an integer number of the OCC spreading units; or, the symbols or slots included in one OCC spreading unit include a plurality of the first time domain resources described above.

For example, when the first PUSCH corresponds to a symbol or slot-based OCC spreading transmission manner and the number of symbols or slots included in the OCC spreading unit is one PUSCH (for example, data symbols included in one PUSCH) or M data symbols, the first time-frequency resource includes symbols or slots included in an integer number of the OCC spreading units. Correspondingly, the first matrix includes a matrix corresponding to symbols or slots included in an integer number of OCC spreading units.

For another example, when the first PUSCH corresponds to a symbol or slot-based OCC spreading transmission manner and the number of symbols or slots included in the OCC spreading unit is a plurality of PUSCHs, the symbols or slots included in one OCC spreading unit include M first time domain resources. Correspondingly, a matrix corresponding to symbols or slots included in one OCC spreading unit includes M first matrixes.

In some embodiments, the first time-frequency resource includes mapping blocks included in an integer number of OCC spreading units.

For example, when the first PUSCH corresponds to a mapping block-based OCC spreading transmission manner, the first time-frequency resource includes mapping blocks included in an integer number of OCC spreading units. Correspondingly, the first matrix includes a matrix corresponding to the mapping block included in an integer number of OCC spreading units.

In some embodiments, the first time-frequency resource includes time domain units included in an integer number of OCC spreading units, and the first time-frequency resource includes mapping blocks included in an integer number of OCC spreading units.

For example, the first time-frequency resource includes symbols or slots included in an integer number of OCC spreading units, and the first time-frequency resource includes mapping blocks included in an integer number of OCC spreading units.

For example, when the first PUSCH corresponds to a symbol-and-mapping block-based OCC spreading transmission manner, the first time-frequency resource includes symbols included in an integer number of OCC spreading units, and includes mapping blocks included in an integer number of OCC spreading units. Correspondingly, the first matrix includes a matrix corresponding to symbols included in an integer number of OCC spreading units, and includes a matrix corresponding to mapping blocks included in an integer number of OCC spreading units.

In some embodiments, the operation that the first bit sequence and/or the second bit sequence are mapped onto mapping units of the first matrix includes one or more of the following cases: in a matrix corresponding to symbols included in at least one OCC spreading unit in the first matrix or in a plurality of first matrixes corresponding to slots included in one OCC spreading unit, in mapping units corresponding to a same frequency domain position, a same first bit sequence and/or a second bit sequence is mapped on mapping units corresponding to different time domain positions which are spread using different OCC factors in the OCC; and in a matrix corresponding to a mapping block included in at least one OCC spreading unit in the first matrix, in mapping units corresponding to a same time domain position, a same first bit sequence and/or second bit sequence is mapped onto mapping units corresponding to different frequency domain positions which are spread using different OCC factors in the OCC.

The operation that the first bit sequence and/or the second bit sequence are mapped onto mapping units of the first matrix includes at least one of the following cases: in a matrix corresponding to symbols included in at least one OCC spreading unit in the first matrix, or in a plurality of first matrixes corresponding to slots included in one OCC spreading unit, among mapping units corresponding to a same frequency domain position (for example, a same subcarrier), a same first bit sequence and/or a second bit sequence is mapped onto mapping units corresponding to different time domain positions (for example, different symbols) which are spread using different OCC factors in the OCC; and in a matrix corresponding to a mapping block included in at least one OCC spreading unit in the first matrix, in mapping units corresponding to a same time domain position (e.g., a same symbol), a same first bit sequence and/or second bit sequence is mapped onto mapping units corresponding to different frequency domain positions (e.g., different subcarriers) which are spread using different OCC factors in the OCC.

In some embodiments, the operation that the first bit sequence and/or the second bit sequence are mapped onto the mapping units of the first matrix includes one or more of the following cases: in a matrix corresponding to symbols included in each OCC spreading unit in the first matrix or in a plurality of first matrixes corresponding to slots included in one OCC spreading unit, in mapping units corresponding to a same frequency domain position, a same first bit sequence and/or second bit sequence is mapped onto mapping units corresponding to different time domain positions which are spread using different OCC factors in the OCC; in a matrix corresponding to a mapping block included in each OCC spreading unit in the first matrix, in mapping units corresponding to a same time domain position, a same first bit sequence and/or second bit sequence is mapped on the mapping units corresponding to different frequency domain positions which are spread using different OCC factors in the OCC.

The operation that the first bit sequence and the second bit sequence are mapped onto mapping units of the first matrix includes at least one of the following cases: in a matrix corresponding to symbols included in each OCC spreading unit in the first matrix, or in a plurality of first matrixes corresponding to slots included in one OCC spreading unit, in mapping units corresponding to a same frequency domain position (for example, a same subcarrier), a same first bit sequence and/or second bit sequence is mapped onto mapping units corresponding to different time domain positions (for example, different symbols) which are spread using different OCC factors in the OCC; in a matrix corresponding to a mapping block included in each OCC spreading unit in the first matrix, in mapping units corresponding to a same time domain position (for example, a same symbol), a same first bit sequence and/or second bit sequence is mapped onto the mapping units corresponding to different frequency domain positions (for example, different subcarriers) which are spread using different OCC factors in the OCC.

In some embodiments, the bit sequence includes the first bit sequence, and the operation that the bit sequence is mapped onto mapping units of the first matrix includes at least one of the following cases:
the first bit sequence is mapped onto the mapping units of the first matrix in a rate-matched manner;
the first bit sequence is mapped onto the mapping units of the first matrix in a puncturing manner; or
a first subsequence in the first bit sequence is mapped onto mapping units of the first matrix in a rate-matched manner, and a second subsequence in the first bit sequence is mapped onto the mapping units of the first matrix in a puncturing manner.

In some embodiments, the operation that the first bit sequence and/or the second bit sequence are mapped onto the mapping units of the first matrix includes one or more of the following cases:
the first bit sequence is mapped onto the mapping units of the first matrix in a rate-matched manner;
the first bit sequence is mapped onto the mapping units of the first matrix in a puncturing manner; or
a first subsequence in the first bit sequence is mapped onto the mapping units of the first matrix in a rate-matched manner, and a second subsequence in the first bit sequence is mapped onto the mapping unit of the first matrix in a puncturing manner.

For example, when only HARQ-ACK information is included in the first bit sequence, and the number of bits of HARQ-ACK information is less than or equal to 2, the first bit sequence is mapped onto the mapping unit of the first matrix in a puncturing manner.

For another example, when HARQ-ACK information is not included in the first bit sequence (while optionally including other UCIs such as CSI Part 1 and/or CSI Part 2), or when HARQ-ACK information is included in the first bit sequence and the number of bits of the HARQ-ACK information is greater than 2 (while optionally including other UCIs such as CSI Part 1 and/or CSI Part 2), the first bit sequence is mapped onto the mapping units of the first matrix in a rate-matched manner.

For another example, when the HARQ-ACK information of less than or equal to 2 bits and other UCI information are included in the first bit sequence, the other UCI information corresponds to the first subsequence, the HARQ-ACK information corresponds to the second subsequence, the first subsequence in the first bit sequence is mapped onto the mapping units of the first matrix in a rate matching manner, and the second subsequence in the first bit sequence is mapped onto the mapping units of the first matrix in a punching manner.

In some embodiments, when the first UCI includes only CSI Part 1, the first subsequence includes a bit sequence corresponding to the CSI Part 1, and the second subsequence includes a bit sequence corresponding to hypothetical 2-bit HARQ-ACK information, and the operation that the bit sequence is mapped onto the mapping units of the first matrix includes an operation that:
the first subsequence is mapped onto the mapping units of the first matrix in a rate-matched manner, and the second subsequence is mapped onto the mapping units of the first matrix in a puncturing manner.

In some embodiments, where the first UCI includes only CSI Part 1, the operation that the first bit sequence and/or the second bit sequence are mapped onto the mapping units of the first matrix includes an operation that the first bit sequence is mapped onto the mapping units of the first matrix. Optionally, when the bits of the HARQ-ACK are 2 bits, the bit sequence corresponding to the bits of the HARQ-ACK is mapped onto mapping units corresponding to REs reserved for the HARQ-ACK.

If bits of actual transmitted HARQ-ACK are less than 2 (for example, no HARQ-ACK bits or only 1 bit), it is necessary to assume that bits of the HARQ-ACK are 2 bits, and the insufficient part needs to be filled to 2 bits by 0, so as to fill the reserved RE, to avoid the occurrence of a blank RE without energy in the PUSCH (avoid the reserved RE not being transmitted). When using the OCC transmission manner, it is also necessary to fill the reserved RE and perform OCC scrambling operation.

In some embodiments, as previously described, the number of time domain units included in the OCC spreading unit corresponds to one of: M PUSCHs, M is an integer multiple of N, N is the OCC length; 1 PUSCH; M data symbols, M is an integer multiple of N, and N is the OCC length.

Here, the data symbol is a data symbol that does not include a DMRS symbol (that is, a symbol for transmitting the first UCI and/or the first UL-SCH). The data symbols occupied by one PUSCH transmission are symbols that are not used for DMRS transmission among the symbols assigned to the PUSCH transmission. For example, 10 symbols are included in the first PUSCH, where the DMRS symbol is the 0th symbol and the 4th symbol, then the data symbols occupied by the first PUSCH transmission are the 1st, 2nd, 3rd, 5th, 6th, 7th, 8th, and 9th symbols.

Further, since the number of symbols or the number of slots included in the OCC spreading unit is M PUSCHs, it can be understood that the number of slots included in the OCC spreading unit is M slots, and each slot includes one PUSCH; or, the number of slots included in the OCC spreading unit is an integer multiple of M slots, where the integer multiple of M slots are used to transmit M PUSCHs. For example, in a scenario in which one TB is mapped to a plurality of slots, assuming that one TB is mapped to two slots for transmission, the number of slots included in the OCC spreading unit is 2*M slots, herein every two slots are used for transmitting one PUSCH, and the 2*M slots are used for transmitting M PUSCHs.

In addition, the number of symbols or the number of slots included in the OCC spreading unit is one PUSCH, which can be understood as that the number of symbols included in the OCC spreading unit is the number of data symbols included in one PUSCH.

In some embodiments, when the number of time domain units included in the OCC spreading unit corresponds to M PUSCHs, the PUSCH is repeatedly transmitted K times, K is an integer multiple of M, and the interval of data symbols associated with two adjacent OCC factors is the number of data symbols included in M/N PUSCHs.

In some embodiments, when the number of time domain units included in the OCC spreading unit corresponds to one PUSCH, the interval of data symbols associated with two adjacent OCC factors is the ratio of the number of data symbols included in one PUSCH to the OCC length.

In some embodiments, in a case where the number of time domain units included in the OCC spreading unit corresponds to M data symbols, the interval of data symbols associated with two adjacent OCC factors is determined through one or more of the following ways:
a value configured by the network device, a preset value in protocol, and the ratio of the number of data symbols included in one PUSCH to the OCC length.

Hereinafter, a description will be given as an example of how the terminal device maps a first bit sequence corresponding to the first UCI and a second bit sequence corresponding to the first UL-SCH onto mapping units of a first matrix in a scenario where the size of the different time domain OCC spreading unit corresponds to the number of symbols or slots included in the OCC spreading unit. The number of rows included in the first matrix is determined according to the number of subcarriers used for transmitting the first UCI and the first UL-SCH in the first time-frequency resource, and the number of columns included in the first matrix is determined according to the number of symbols used for transmitting the first UCI and the first UL-SCH in the first time-frequency resource. The rows are arranged from small to large by subcarrier index, the columns are arranged from small to large by symbol index and/or slot index, and each mapping unit in the first matrix corresponds to one RE in the first time-frequency resource for transmitting the first UCI and the first UL-SCH.

Case 1-1: The size of a time domain OCC spreading unit, the number of symbols or slots included in the OCC spreading unit, is M PUSCHs, M is an integer multiple of N, and N is the OCC length. In this case, the PUSCH is repeatedly transmitted K times, K is an integer multiple of M, and the interval of data symbols associated with two adjacent OCC factors is the number of data symbols included in M/N PUSCHs.

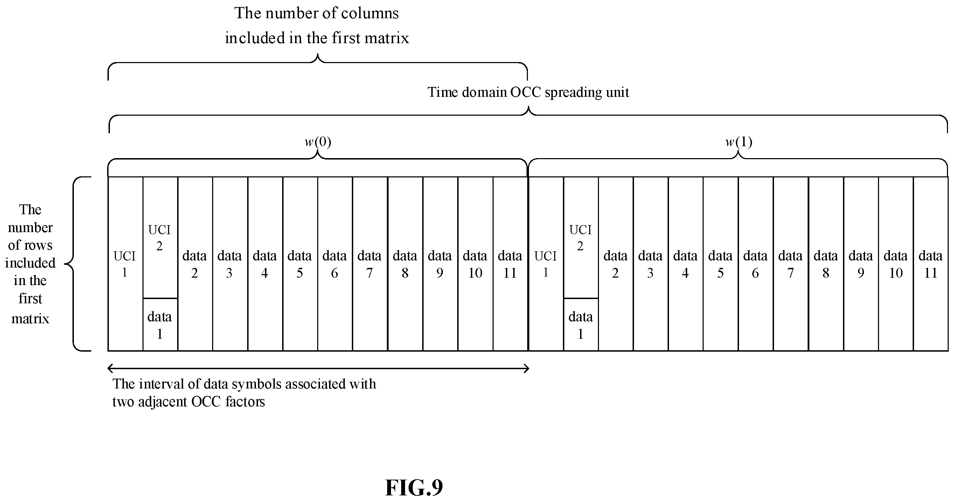

FIG. 9 is a schematic diagram of mapping in which the number of symbols or the number of slots included in the OCC spreading unit is M PUSCHs (M =2). As shown in FIG. 9, it is shown that the first UCI and the first UL-SCH are mapped on the first matrix when the size of a time domain OCC spreading unit (the number of symbols or the number of slots included in an OCC spreading unit) are M PUSCHs. In this example, it is assumed that a first time-frequency resource includes 12 data symbols, the first OCC is {w(0), w(1)} (that is, the OCC factors are w(0) and w(1), respectively), the first OCC length is N =2, the number of symbols or the number of slots included in one OCC spreading unit is data symbols included in the M PUSCHs (M=2), and the interval of data symbols associated with two adjacent OCC factors is the number of data symbols included in one PUSCH. The first PUSCH is repeatedly transmitted twice in the time domain, that is, a size of two first time-frequency resources is occupied, herein the first UCI and the first UL-SCH are repeatedly transmitted twice in the time domain. In the data symbols included in one PUSCH, the first UCI occupies the first data symbol and most of the resources of the second data symbol, represented by UCI1 and UCI2 in FIG. 9, and the first UL-SCH occupies other resources among the 12 data symbols except the resources occupied by the first UCI, represented by data 1 to data 11 in FIG. 9.

As shown in FIG. 9, the terminal device maps the first bit sequence and the second bit sequence on mapping units of the first matrix, herein the number of bits mapped on each mapping unit is determined according to the modulation order of the modulation symbol. Then the bits mapped on each mapping unit are modulated to obtain modulation symbols. The modulation symbols on the mapping units of the first matrix are repeated twice, herein w(0) is used to spread the modulation symbols on the mapping units of the 1-st first matrix and w(1) is used to spread the modulation symbols on the mapping units of the 2-nd first matrix. Then, the terminal device maps the information obtained by performing a DFT operation on the spread modulation symbols on each column of mapping units in each first matrix onto a symbol, corresponding to the column, in the first time-frequency resource corresponding to the first matrix. Alternatively, the DFT operation may be performed first and then the spreading may be performed, but the present invention is not limited thereto.

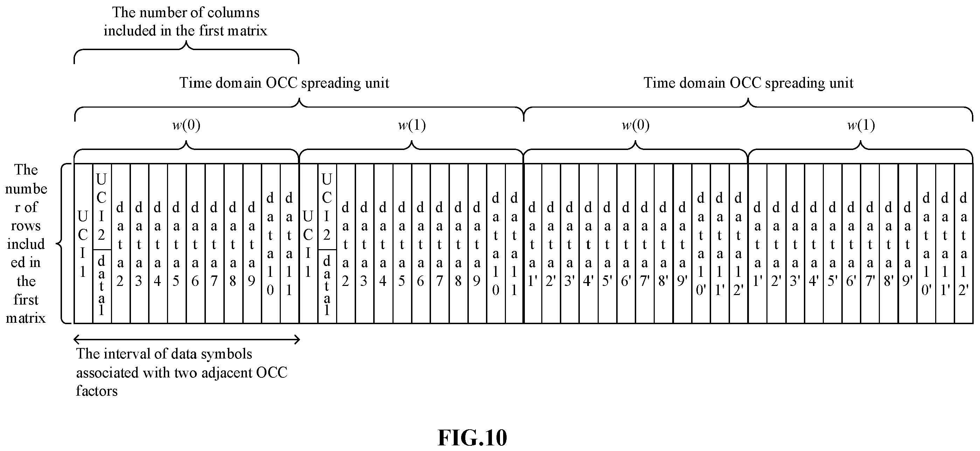

FIG. 10 is another mapping schematic diagram in which the number of symbols or slots included in the OCC spreading unit is M PUSCHs (M =2), FIG. 10 shows another schematic of the mapping of the first UCI and the first UL-SCH on the first matrix when the number of symbols or slots included in the OCC spreading unit is M PUSCHs. In this example, it is assumed that the first time-frequency resource includes 12 data symbols, the first OCC is {w (0), w (1)}, the first OCC length is N =2, the number of symbols or the number of slots included in one OCC spreading unit is data symbols included in the M=2 PUSCHs, and the interval of data symbols associated with two adjacent OCC factors is the number of data symbols included in one PUSCH. The first PUSCH is repeatedly transmitted four times in the time domain, that is, a size of four first time-frequency resources is occupied, herein the first UL-SCH is repeatedly transmitted four times in the time domain, and the first UCI is repeatedly transmitted two times in the time domain (that is, the first UCI is transmitted only within symbols or slots included in one OCC spreading unit). In the symbols or slots included in the OCC spreading unit carrying the first UCI, among the data symbols included in one PUSCH, the first UCI occupies the first data symbol and most of the resources of the second data symbol, represented by UCI1 and UCI2 in FIG. 10, and the first UL-SCH occupies other resources among the 12 data symbols except the resources occupied by the first UCI, represented by DATA 1 to DATA 11 in FIG. 10. The first UL-SCH occupies 12 data symbols included in one PUSCH in the symbols or slots included in the OCC spreading unit that does not carry the first UCI, which are represented by data 1 'to data 12' in FIG. 10.

As shown in FIG. 10, in symbols or slots included in the OCC spreading unit carrying the first UCI, the terminal device maps a first bit sequence (corresponding to UCI1 and UCI2) and a second bit sequence (corresponding to data 1 to data 11) on mapping units of the first matrix, herein the number of bits mapped on each mapping unit is determined according to the modulation order of the modulation symbol. Then the bits mapped on each mapping unit are modulated to obtain modulation symbols. The modulation symbols on the mapping units of the first matrix are repeated twice, herein w(0) is used to spread the modulation symbols on the mapping units of the 1-st first matrix and w(1) is used to spread the modulation symbols on the mapping units of the 2-nd first matrix. Then, the terminal device maps the information obtained by performing a DFT operation on the spread modulation symbols on each column of mapping units in each first matrix onto a symbol, corresponding to the column, in the first time-frequency resource corresponding to the first matrix. Alternatively, the DFT operation may be performed first and then the spreading may be performed, but the present invention is not limited thereto.

In the symbols or slots included in the OCC spreading unit that does not carry the first UCI, the terminal device maps a second bit sequence (corresponding to data 1' to data 12') on the mapping units of the first matrix, herein the number of bits mapped on each mapping unit is determined according to the modulation order of the modulation symbol. Then the bits mapped on each mapping unit are modulated to obtain modulation symbols. The modulation symbols on the mapping units of the first matrix are repeated twice, herein w(0) is used to spread the modulation symbols on the mapping units of the 1-st first matrix and w(1) is used to spread the modulation symbols on the mapping units of the 2-nd first matrix. Then, the terminal device maps the information obtained by performing a DFT operation on the spread modulation symbols on each column of mapping units in each first matrix onto a symbol, corresponding to the column, in the first time-frequency resource corresponding to the first matrix. Alternatively, the DFT operation may be performed first and then the spreading may be performed, but the present invention is not limited thereto.

Case 1-2: The number of symbols or the number of slots included in the OCC spreading unit is one PUSCH. In this case, the interval of data symbols associated with two adjacent OCC factors is the ratio of the number of data symbols included in one PUSCH to the OCC length.

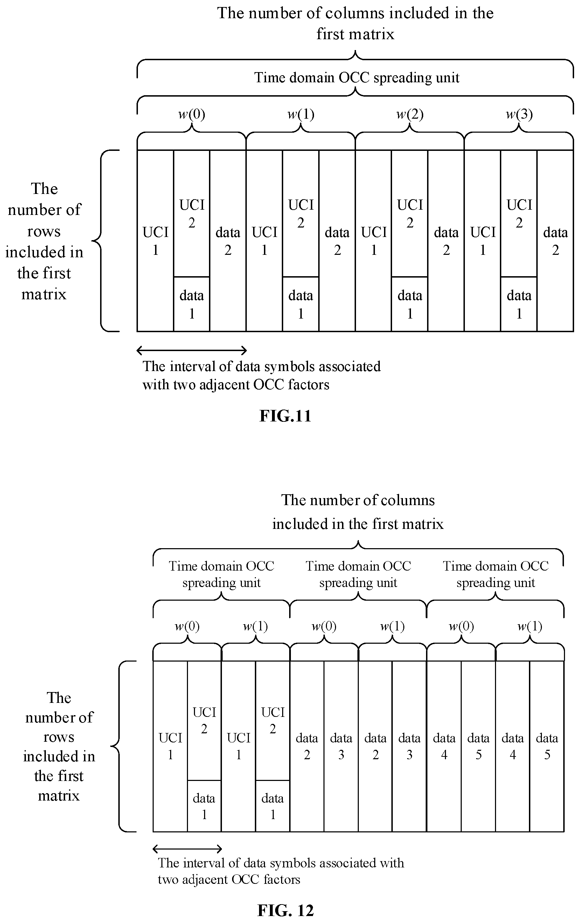

FIG. 11 is a mapping schematic diagram in which the number of symbols or the number of slots included in an OCC spreading unit is one PUSCH, and shows a schematic diagram in which the first UCI and the first UL-SCH are mapped on a first matrix when the number of symbols or the number of slots included in the OCC spreading unit is one PUSCH. In this example, it is assumed that the first time-frequency resource includes 12 data symbols, the first OCC is {w(0), w(1), w(2), w(3)}, the first OCC length is N =4, the interval of data symbols associated with two adjacent OCC factors is 3 (i.e., 12/4) data symbols, and the first PUSCH includes symbols or slots included in one OCC spreading unit. Here, the first UCI occupies the first data symbol and most of the resources in the second data symbol, represented by UCI1 and UCI2 in FIG. 11, and the first UL-SCH occupies other resources among the 12 data symbols except the resources occupied by the first UCI, represented by data 1 and data 2 in FIG. 11.

As shown in FIG. 11, the terminal device maps the first bit sequence and the second bit sequence on mapping units of the first matrix, herein the number of bits mapped on each mapping unit is determined according to the modulation order of the modulation symbol. Then the bits mapped on each mapping unit are modulated to obtain modulation symbols, and the corresponding OCC factor is used to spread each modulation symbol. Specifically, the modulation symbol of UCI1 corresponding to the first data symbol, the modulation symbol of UCI2 corresponding to the second data symbol, the modulation symbol of data 1 corresponding to the second data symbol, and the modulation symbol of data 2 corresponding to the third data symbol are spread using w(0). The modulation symbol of UCI1 corresponding to the fourth data symbol, the modulation symbol of UCI2 corresponding to the fifth data symbol, the modulation symbol of data 1 corresponding to the fifth data symbol, and the modulation symbol of data 2 corresponding to the sixth data symbol are spread using w(1). The modulation symbol of UCI1 corresponding to the seventh data symbol, the modulation symbol of UCI 2 corresponding to the eighth data symbol, the modulation symbol of data 1 corresponding to the eighth data symbol, and the modulation symbol of data 2 corresponding to the ninth data symbol are spread using w(2). The modulation symbol of UCI1 corresponding to the tenth data symbol, the modulation symbol of UCI2 corresponding to the eleventh data symbol, the modulation symbol of data 1 corresponding to the eleventh data symbol, and the modulation symbol of data 2 corresponding to the twelfth data symbol are spread using w(3). Then, the terminal device maps the information obtained by performing a DFT operation on the spread modulation symbols on each column of mapping units in the first matrix onto a symbol, corresponding to the column, in the first time-frequency resource. Alternatively, the DFT operation may be performed first and then the spreading may be performed, but the present invention is not limited thereto.

Case 1-3: The number of symbols or the number of slots included in an OCC spreading unit is M data symbols, M is an integer multiple of N, and N is the OCC length. In this case, the interval of data symbols associated with two adjacent OCC factors is one of a value configured by a network device, a preset value in protocol, and a ratio of the number of data symbols included in one PUSCH to the OCC length.

FIG. 12 is a mapping schematic diagram in which the number of symbols or slots included in the OCC spreading unit is M =4 data symbols, and shows a schematic diagram in which the first UCI and the first UL-SCH are mapped on a first matrix when the number of symbols or slots included in the OCC spreading unit is M data symbols. In this example, it is assumed that the first time-frequency resource includes 12 data symbols, the first OCC is {w(0), w(1)}, the first OCC length is N =2, the number of symbols or slots included in the OCC spreading unit is M =4, the interval of data symbols associated with two adjacent OCC factors is 2 data symbols, and the first PUSCH includes symbols or slots included in three OCC spreading unit. In FIG. 12, the first UCI occupies the first data symbol and most of the resources of the second data symbol, represented by UCI1 and UCI2, and the first UL-SCH occupies other resources of the 12 data symbols except the resources occupied by the first UCI, represented by data 1 to data 5 in FIG. 12.

As shown in FIG. 12, the terminal device maps the first bit sequence and the second bit sequence on mapping units of the first matrix. The number of bits mapped on each mapping unit is determined according to the modulation order of the modulation symbol. Then the bits mapped on each mapping unit are modulated to obtain modulation symbols, and the corresponding OCC factor is used to spread each modulation symbol. Specifically, the modulation symbol of UCI1 corresponding to the first data symbol, the modulation symbol of UCI2 corresponding to the second data symbol, and the modulation symbol of data 1 corresponding to the second data symbol are spread using w(0). The modulation symbol of UCI1 corresponding to the third data symbol, the modulation symbol of UCI2 corresponding to the fourth data symbol, and the modulation symbol of data 1 corresponding to the fourth data symbol are spread using w(1). The modulation symbol of the data 2 corresponding to the fifth data symbol and the modulation symbol of the data 3 corresponding to the sixth data symbol are spread using w(0). The modulation symbol of the data 2 corresponding to the seventh data symbol and the modulation symbol of the data 3 corresponding to the eighth data symbol are spread using w(1). The modulation symbol of data 4 corresponding to the ninth data symbol and the modulation symbol of data 5 corresponding to the tenth data symbol are spread using w(0). The modulation symbol of the data 4 corresponding to the eleventh data symbol and the modulation symbol of the data 5 corresponding to the twelfth data symbol are spread using w(1). Then, the terminal device maps the information obtained by performing a DFT operation on the spread modulation symbols on each column of mapping units in the first matrix onto a symbol, corresponding to the column, in the first time-frequency resource. Alternatively, the DFT operation may be performed first and then the spreading may be performed, but the present invention is not limited thereto.

In some embodiments, as previously described, a size of a mapping block included in an OCC spreading unit corresponds to one of: physical resource blocks (PRBs) occupied by the first PUSCH transmission; 1 PRB; and 1 resource block group (RBG).

In some embodiments, when the size of the mapping block included in the OCC spreading unit corresponds to the number P of PRBs occupied by the first PUSCH transmission, the interval of the number of subcarriers associated with two adjacent OCC factors is determined by one or more of: a value configured by a network device, a preset value in protocol, and a ratio of the number of subcarriers included in the P PRBs to the OCC length.

In some embodiments, when the size of the mapping block included in the OCC spreading unit corresponds to one PRB, the interval of the number of subcarriers associated with two adjacent OCC factors is determined by one or more of: a value configured by a network device, a preset value in protocol, and a ratio of the number of subcarriers included in one PRB to the OCC length.

In some embodiments, when the size of the mapping block included in the OCC spreading unit corresponds to one RBG, the interval of the number of subcarriers associated with two adjacent OCC factors is determined by one or more of: a value configured by a network device, a preset value in protocol, and a ratio of the number of subcarriers included in one RBG to the OCC length.

Hereinafter, a description will be given as an example of how a terminal device maps a first bit sequence corresponding to the first UCI and a second bit sequence corresponding to the first UL-SCH on a mapping unit of a first matrix in a scenario to which the sizes of mapping blocks included in different OCC spreading units correspond. Herein the number of rows included in the first matrix is determined according to the number of subcarriers used for transmitting the first UCI and the first UL-SCH in the first time-frequency resource, and the number of columns included in the first matrix is determined according to the number of symbols used for transmitting the first UCI and the first UL-SCH in the first time-frequency resource. Herein the rows are arranged from small to large by subcarrier index, the columns are arranged from small to large by symbol index, and each mapping unit in the first matrix corresponds to one RE in the first time-frequency resource for transmitting the first UCI and the first UL-SCH.

Case 2-1: a size of a mapping block included in an OCC spreading unit is the number P of PRBs occupied by the first PUSCH transmission, P is an integer multiple of N or P*12 is an integer multiple of N, and N is the OCC length. In this case, the interval of the number of subcarriers associated with two adjacent OCC factors is one of: a value configured by the network device, a preset value in protocol, and a ratio of the number of subcarriers included in the P PRBs to the OCC length.

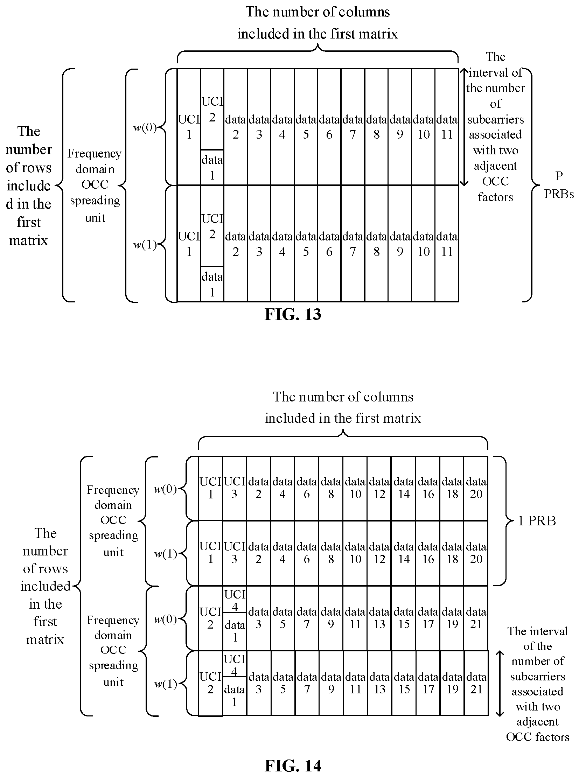

FIG. 13 is a mapping schematic diagram in which a size of a mapping block included in an OCC spreading unit is the number P of PRBs occupied by the first PUSCH transmission, and shows a schematic diagram in which the first UCI and the first UL-SCH are mapped on a first matrix when the size of the mapping block included in the OCC spreading unit is the number P of PRBs occupied by the first PUSCH transmission. In this example, it is assumed that the first time-frequency resource includes P PRBs, the first OCC is {w(0), w(1)}, and the first OCC length N =2, the size of the mapping block included in the OCC spreading unit is P PRBs. The interval, in the number of subcarriers, associated with two adjacent OCC factors is P*12/N subcarriers. For example, if P is 10, the interval of the number of subcarriers associated with two adjacent OCC factors is 60 subcarriers. For another example, when P is 5, the interval, in the number of subcarriers, associated with two adjacent OCC factors is 30 subcarriers. It is assumed that among the 12 data symbols included in the first PUSCH, the first UCI occupies the first data symbol and most of the resources of the second data symbol, represented by UCI1 and UCI2 in FIG. 13, and the first UL-SCH occupies other resources among the 12 data symbols except the resources occupied by the first UCI, represented by data 1 to data 11 in FIG. 13.

As shown in FIG. 13, the terminal device maps the first bit sequence and the second bit sequence on mapping units of the first matrix, herein the number of bits mapped on each mapping unit is determined according to the modulation order of the modulation symbol. Then the bits mapped on each mapping unit are modulated to obtain modulation symbols, and the corresponding OCC factor is used to spread each modulation symbol. Specifically, w(0) is used to spread the modulation symbols of UCI1, the modulation symbols of UCI2, and the modulation symbols of data 1 to data 11 corresponding to the first P*6 subcarriers among the P PRBs; w(1) is used to spread the modulation symbols of UCI1, the modulation symbols of UCI2, and the modulation symbols of data 1 to data 11 corresponding to the next P*6 subcarriers among the P PRBs. Then, the terminal device maps the information obtained by performing a DFT operation on the spread modulation symbols on each column of mapping units in the first matrix onto a symbol, corresponding to the column, in the first time-frequency resource.

Case 2-2: a size of a mapping block included in an OCC spreading unit is 1 PRB, where N is divisible by 12 (i.e., 12 is an integer multiple of N), and N is the OCC length. In this case, the interval of the number of subcarriers associated with two adjacent OCC factors is one of: a value configured by the network device, a preset value in protocol, and a ratio of the number of subcarriers included in one PRB (that is, 12) to the OCC length.

FIG. 14 is a mapping schematic diagram in which the size of a mapping block included in an OCC spreading unit is 1 PRB, and shows a schematic diagram in which the first UCI and the first UL-SCH are mapped on a first matrix when the size of the mapping block included in the OCC spreading unit is 1 PRB. In this example, it is assumed that the first time-frequency resource includes two PRBs, the first OCC is {w(0), w(1)}, and the first OCC length is N =2. The interval of the number of subcarriers associated with two adjacent OCC factors is 6 subcarriers. It is assumed that among the twelve data symbols included in the first PUSCH, the first UCI occupies the first data symbol and most of the resources of the second data symbol, represented by UCI1 to UCI4 in FIG. 14, and the first UL-SCH occupies other resources in the twelve data symbols except the resources occupied by the first UCI, represented by data 1 to data 21 in FIG. 14.

As shown in FIG. 14, the terminal device maps the first bit sequence and the second bit sequence on mapping units of the first matrix, herein the number of bits mapped on each mapping unit is determined according to the modulation order of the modulation symbol. Then the bits mapped on each mapping unit are modulated to obtain modulation symbols, and the corresponding OCC factor is used to spread each modulation symbol. Specifically, w(0) is used to spread modulation symbols of UCI1, UCI3, data 2, 4, 6, 8, 10, 12, 14, 16, 18, and 20 corresponding to the first six subcarriers in the first PRB; w(1) is used to spread modulation symbols of UCI1, UCI3, data 2, 4, 6, 8, 10, 12, 14, 16, 18, and 20 corresponding to the last six subcarriers in the first PRB; w(0) is used to spread modulation symbols of UCI2, UCI4, data 1, 3, 5, 7, 9, 11, 13, 15, 17, 19, and 21 corresponding to the first 6 subcarriers in the second PRB; w(1) is used to spread the modulation symbols of UCI2, UCI4, and data 1, 3, 5, 7, 9, 11, 13, 15, 17, 19, and 21 corresponding to the last six subcarriers in the second PRB. Then, the terminal device maps the information obtained by performing a DFT operation on the spread modulation symbols on each column of mapping units in the first matrix onto a symbol, corresponding to the column, in the first time-frequency resource.

Case 2-3: a size of a mapping block included in an OCC spreading unit is 1 RBG, where N is divisible by the number of subcarriers included in 1 RBG (that is, the number of subcarriers included in 1 RBG is an integer multiple of N), and N is the OCC length. In this case, the interval of the number of subcarriers associated with two adjacent OCC factors is one of: a value configured by the network device, a preset value in protocol, and a ratio of the number of subcarriers included in one RBG to the OCC length.

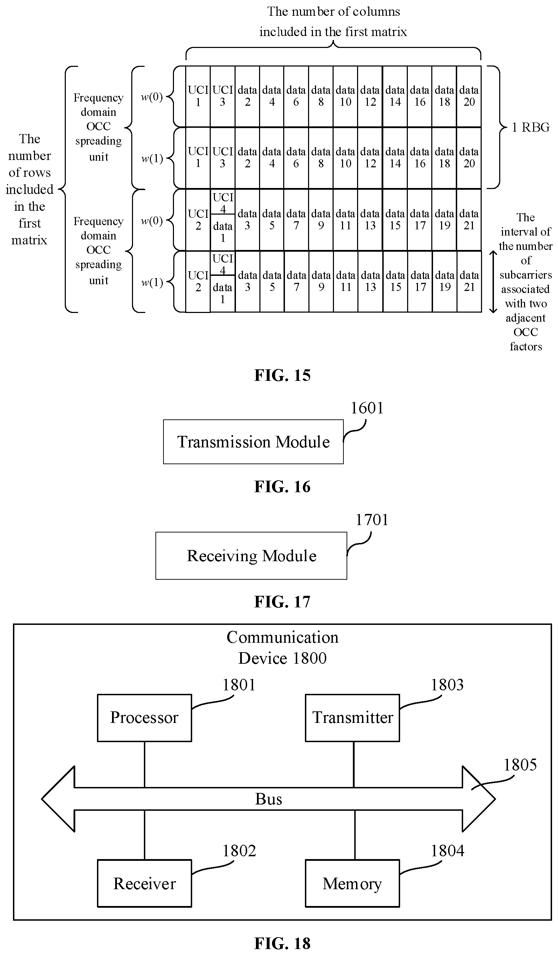

FIG. 15 is a mapping schematic diagram in which a size of a mapping block included in an OCC spreading unit is 1 RBG, and shows a schematic diagram in which the first UCI and the first UL-SCH are mapped on a first matrix when the size of the mapping block included in the OCC spreading unit is 1 RBG. In this example, it is assumed that the first time-frequency resource includes two RBGs, the first OCC is {w(0), w(1)}, and the first OCC length is N =2. The interval of the number of subcarriers associated with two adjacent OCC factors is the ratio of the number of subcarriers included in one RBG to the OCC length. It is assumed that among the 12 data symbols included in the first PUSCH, the first UCI occupies the first data symbol and most of the resources of the second data symbol, which are represented by UCI1 to UCI4 in FIG. 15, and the first UL-SCH occupies other resources among the 12 data symbols except the resources occupied by the first UCI, which are represented by data 1 to data 21 in FIG. 15.

As shown in FIG. 15, the terminal device maps the first bit sequence and the second bit sequence on mapping units of the first matrix, herein the number of bits mapped on each mapping unit is determined according to the modulation order of the modulation symbol. Then, the bits mapped on each mapping unit are modulated to obtain modulation symbols, and the corresponding OCC factor is used to spread each modulation symbol. Specifically, w(0) is used to spread modulation symbols of UCI1, UCI3, data 2, 4, 6, 8, 10, 12, 14, 16, 18, and 20 corresponding to the first half subcarrier in the first RBG; w (1) is used to spread modulation symbols of UCI1, UCI3, data 2, 4, 6, 8, 10, 12, 14, 16, 18, and 20 corresponding to the second half subcarrier in the first RBG; w(0) is used to spread modulation symbols of UCI2, UCI4, data 1, 3, 5, 7, 9, 11, 13, 15, 17, 19, and 21 corresponding to the first half subcarrier in the second RBG; w(1) is used to spread modulation symbols of UCI2, UCI4, and data 1, 3, 5, 7, 9, 11, 13, 15, 17, 19, and 21 corresponding to the second half subcarrier in the second RBG. Then, the terminal device maps the information obtained by performing a DFT operation on the spread modulation symbols on each column of mapping units in the first matrix onto a symbol, corresponding to the column, in the first time-frequency resource.

In Operation 820, when the first time-frequency resource and the second time-frequency resource overlap in the time domain, and the first physical uplink shared channel (PUSCH) corresponds to an Orthogonal Cover Code (OCC) spreading transmission manner for transmission, the network device receives uplink transmission information from the terminal device.

Here, the network device may receive the information of uplink transmission transmitted by the terminal device in the above manner.

That is, the operation of receiving the information of the uplink transmission from the terminal device includes one or more of: receiving information obtained by multiplexing the first UCI and the first UL-SCH through the first time-frequency resource; receiving a first UCI through a first time-frequency resource; receiving a first UCI through a second time-frequency resource; and receiving a first UL-SCH through a first time-frequency resource.

In some embodiments, the operation that the network device receives the information of uplink transmission from the terminal device includes one or more of: information obtained by multiplexing the first UCI and the first UL-SCH is received through a first time-frequency resource, and the first UCI is not received through a second time-frequency resource; or,
a first UCI is received through a first time-frequency resource and the first UCI is not received through a second time-frequency resource; or,
a first UCI is received through a second time-frequency resource and a first UL-SCH is not received through the first time-frequency resource; or,
a first UCI is received through a second time-frequency resource, and a first UL-SCH is received through the first time-frequency resource.

In some embodiments, the operation that the network device receives the information of uplink transmission from the terminal device includes: information obtained by multiplexing the first UCI and the first UL-SCH is received through a first time-frequency resource when the UL-SCH is carried on the first PUSCH; the first UCI is received through the first time-frequency resource when the UL-SCH is not carried on the first PUSCH.

In the NTN network scenario, in order to improve the uplink coverage of the cell, PUSCH is usually transmitted by repeated transmission. In order to improve the uplink capacity of the system while meeting the uplink coverage requirements, OCC spreading transmission may be employed for PUSCH. The scheme shown in the above embodiments of the present application can be applied in the NTN network scenario, and the multiplexing mode of UCI and PUSCH can be enhanced, so that orthogonality between different terminal devices can be ensured when the OCC is used to transmit PUSCH, thereby ensuring the transmission performance of PUSCH.

Referring to FIG. 16, a block diagram of an uplink transmission apparatus according to an embodiment of the present application is shown. The uplink transmission apparatus has functions executed by the terminal device in the method shown in any one of FIGs. 6 to 8. As shown in FIG. 16, the apparatus may include a transmission module 1601.

The transmission module 1601 is configured to perform transmission processing in a case where a first time-frequency resource and a second time-frequency resource overlap in a time domain, and a first physical uplink shared channel (PUSCH) corresponds to an Orthogonal Cover Code (OCC) spreading transmission manner. The transmission processing includes one or more of the following processing: transmitting information obtained by multiplexing first uplink control information (UCI) and first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

In some embodiments, the transmission processing includes one or more of the following processing:
transmitting, through the first time-frequency resource, the information obtained by multiplexing the first UCI and the first UL-SCH and not transmitting, through the second time-frequency resource, the first UCI; or,
transmitting, through the first time-frequency resource, the first UCI and not transmitting, through the second time-frequency resource, the first UCI; or,
transmitting, through the second time-frequency resource, the first UCI and not transmitting, through the first time-frequency resource, the first UL-SCH; or
transmitting, through the second time-frequency resource, the first UCI and transmitting, through the first time-frequency resource, the first UL-SCH.

In some embodiments, the operation that the information obtained by multiplexing the first UCI and the first UL-SCH is transmitted through the first time-frequency resource includes an operation that:
in a case where a UL-SCH is carried on the first PUSCH, the information obtained by multiplexing the first UCI and the first UL-SCH is transmitted through the first time-frequency resource;
the operation that the first time-frequency resource is transmitted through the first UCI includes an operation that:
   in a case where the UL-SCH is not carried on the first PUSCH, the first UCI is transmitted through the first time-frequency resource.

In some embodiments, in a case where the information obtained by multiplexing the first UCI and the first UL-SCH is transmitted through the first time-frequency resource, the first UCI corresponds to an OCC spreading transmission manner, and the first UL-SCH corresponds to an OCC spreading transmission manner; or,
in a case where the first UCI is transmitted through the first time-frequency resource, the first UCI corresponds to an OCC spreading transmission manner.

In some embodiments, the OCC spreading transmission manner corresponding to the first UCI is the same as the OCC spreading transmission manner corresponding to the first PUSCH; and/or,
the OCC spreading transmission manner corresponding to the first UL-SCH is the same as the OCC spreading transmission manner corresponding to the first PUSCH.

In some embodiments, the OCC spreading transmission manner corresponding to the first PUSCH includes one of the following:
a symbol-based OCC spreading transmission manner;
a slot-based OCC spreading transmission manner;
a mapping block-based OCC spreading transmission manner;
a symbol-and-mapping block-based OCC spreading transmission manner; or
a slot-and-mapping block-based OCC spreading transmission manner.

In some embodiments, the operation that the information obtained by multiplexing the first UCI and the first UL-SCH is transmitted through the first time-frequency resource includes an operation that:
a bit sequence is mapped onto mapping units of the first matrix.

The bit sequence includes a first bit sequence and a second bit sequence, the first bit sequence includes a bit sequence corresponding to the first UCI, and the second bit sequence includes a bit sequence corresponding to the first UL-SCH.

The number of rows of mapping units included in the first matrix is determined according to the number of subcarriers used for transmitting the first UCI and the first UL-SCH in the first time-frequency resource. The number of columns of mapping units included in the first matrix is determined according to the number of symbols used for transmitting the first UCI and the first UL-SCH in the first time-frequency resource.

In some embodiments, the operation that the first UCI is transmitted through the first time-frequency resource includes an operation that:
a bit sequence is mapped onto mapping units of the first matrix.

The bit sequence includes a first bit sequence, and the first bit sequence includes a bit sequence corresponding to the first UCI.

The number of rows of mapping units included in the first matrix is determined according to the number of subcarriers used for transmitting the first UCI in the first time-frequency resource. The number of columns of mapping units included in the first matrix is determined according to the number of symbols used for transmitting the first UCI in the first time-frequency resource.

In some embodiments, the operation that the bit sequence is mapped onto the mapping units of the first matrix includes at least one of:
in a case where the OCC spreading transmission manner corresponding to the first PUSCH includes a symbol-based OCC spreading transmission manner, in mapping units in a same row of the first matrix corresponding to symbols included in each OCC spreading unit, a same bit sequence is mapped onto mapping units in different columns which are spread using different OCC factors in a first OCC;
in a case where the OCC spreading transmission manner corresponding to the first PUSCH includes a slot-based OCC spreading transmission manner, in mapping units of multiple first matrixes corresponding to slots included in each OCC spreading unit, a same bit sequence is mapped onto mapping units of different first matrixes which are spread using different OCC factors in a first OCC; or
in a case where the OCC spreading transmission manner corresponding to the first PUSCH includes a mapping block-based OCC spreading transmission manner, in the mapping units in a same column of a first matrix corresponding to a mapping block included in each OCC spreading unit, a same bit sequence is mapped onto mapping units in different rows which are spread using different OCC factors in a first OCC.

Herein the first OCC is an OCC corresponding to the first PUSCH.

In some embodiments, in a case where the OCC spreading transmission manner corresponding to the first PUSCH includes the symbol or slot-based OCC spreading transmission manner, the OCC spreading unit includes a minimum time domain unit which is spread using different OCC factors in a first OCC; and/or,
in a case where the OCC spreading transmission manner corresponding to the first PUSCH includes the mapping block-based OCC spreading transmission manner, the OCC spreading unit includes a minimum mapping block unit which is spread using different OCC factors in a first OCC.

In some embodiments, the bit sequence includes the first bit sequence, and the operation that the bit sequence is mapped onto the mapping units of the first matrix includes at least one of the following cases:
the first bit sequence is mapped onto the mapping units of the first matrix in a rate-matched manner;
the first bit sequence is mapped onto the mapping units of the first matrix in a puncturing manner; or
a first subsequence in the first bit sequence is mapped onto the mapping units of the first matrix in a rate-matched manner, and a second subsequence in the first bit sequence is mapped onto the mapping units of the first matrix in a puncturing manner.

In some embodiments, in a case where the first UCI includes only CSI Part 1, the first subsequence includes a bit sequence corresponding to the CSI Part 1, the second subsequence includes a bit sequence corresponding to hypothetical 2-bit HARQ-ACK information, and the operation that the bit sequence is mapped onto the mapping units of the first matrix includes an operation that:
the first subsequence is mapped onto the mapping units of the first matrix in a rate-matched manner, and the second subsequence is mapped onto the mapping units of the first matrix in a puncturing manner.

In some embodiments, the method further includes at least one of the following operations:
bits mapped onto each mapping unit of the first matrix are modulated to obtain a modulation symbol;
each modulation symbol is spread using a corresponding OCC factor in the first OCC;
information obtained by performing a DFT operation on spread modulation symbols on each column of mapping units in the first matrix is mapped onto a resource, corresponding to the column, in the first time-frequency resource.

Herein the first OCC is an OCC corresponding to the first PUSCH.

In some embodiments, the method further includes at least one of the following operations:
bits mapped onto each mapping unit of the first matrix are modulated to obtain a modulation symbol;
information obtained by performing a DFT operation on modulation symbols on each column of mapping units in the first matrix is mapped onto a resource, corresponding to the column, in the first time-frequency resource;
each symbol in the first time-frequency resource is spread using a corresponding OCC factor in the first OCC.

Herein the first OCC is an OCC corresponding to the first PUSCH.

In some embodiments, the method further includes at least one of the following operations:
bits mapped onto each mapping unit of the first matrix are modulated to obtain a modulation symbol;
each modulation symbol is spread using a corresponding OCC factor in the first OCC;
the spread modulation symbols on each mapping unit in the first matrix are mapped onto a resource, corresponding to the mapping unit, in the first time-frequency resource.

Herein the first OCC is an OCC corresponding to the first PUSCH.

In some embodiments, in a case where the information obtained by multiplexing the first UCI and the first UL-SCH is transmitted through the first time-frequency resource, the first UCI does not correspond to an OCC spreading transmission manner, and the first UL-SCH does not correspond to an OCC spreading transmission manner; or,
in a case where the first UCI is transmitted through the first time-frequency resource, the first UCI does not correspond to an OCC spreading transmission manner.

In some embodiments, the mapping relationship between the first UCI and the first PUCCH includes:
the first PUCCH is used for transmitting the first UCI; or,
the first UCI is mapped onto the first PUCCH; or,
the first UCI includes a UCI mapped onto the first PUCCH when the first time-frequency resource and the second time-frequency resource do not overlap in a time domain; or,
the first UCI includes a UCI to be mapped to the first PUCCH without considering overlapping of the first time-frequency resource and the second time-frequency resource in a time domain.

In some embodiments, the mapping relationship between the first UL-SCH and the first PUSCH includes:
the first PUSCH is used for transmitting the first UL-SCH; or,
the first UL-SCH is mapped onto the first PUSCH.

In some embodiments, the first UCI includes one or more of: HARQ-ACK, CSI Part 1, CSI Part 2, or CG-UCI.

In some embodiments, in a case where a UL-SCH is carried on the first PUSCH, the first UCI includes one or more of: HARQ-ACK, CSI Part 1, CSI Part 2, or CG-UCI. Herein,
when the first UCI includes both the HARQ-ACK and the CG-UCI, the HARQ-ACK and the CG-UCI are coded jointly;
when the first UCI does not simultaneously include the HARQ-ACK and the CG-UCI, the HARQ-ACK or the CG-UCI is independently encoded;
when the first UCI includes the CSI Part 1, the CSI Part 1 is independently encoded;
when the first UCI includes the CSI Part 2, the CSI Part 2 is independently encoded.

In some embodiments, in a case where the first PUSCH does not carry a UL-SCH, the first UCI includes one or more of: HARQ-ACK, CSI Part 1, or CSI Part 2. Herein
when the first UCI includes the HARQ-ACK, the HARQ-ACK is independently encoded;
when the first UCI includes the CSI Part 1, the CSI Part 1 is independently encoded;
when the first UCI includes the CSI Part 2, the CSI Part 2 is independently encoded.

In some embodiments, the first PUSCH corresponds to the OCC spreading transmission manner, which includes that:
it is determined that the first PUSCH corresponds to the OCC spreading transmission manner according to first configuration information transmitted by a network device.

In some embodiments, the first configuration information is carried in at least one of a system message, a RRC, a MAC CE, or DCI.

In some embodiments, the OCC spreading transmission manner corresponding to the first PUSCH is determined according to the first configuration information.

In some embodiments, the OCC spreading transmission manner corresponding to the first PUSCH is predefined.

In some embodiments, the symbol-based OCC spreading transmission manner includes that:
in a matrix corresponding to symbols included in the OCC spreading unit, in mapping units corresponding to a same frequency domain position, a same modulation symbol on mapping units corresponding to different time domain positions is spread using different OCC factors in the OCC;

The slot-based OCC spreading transmission manner includes that:
in a matrix corresponding to slots included in the OCC spreading unit, in mapping units corresponding to a same frequency domain position, a same modulation symbol on mapping units corresponding to different time domain positions is spread using different OCC factors in the OCC.

In some embodiments, the mapping block-based OCC spreading transmission manner includes that:
in a matrix corresponding to a mapping block included in an OCC spreading unit, in the mapping units corresponding to a same time domain position, a same modulation symbol on mapping units corresponding to different frequency domain positions is spread using different OCC factors in the OCC.

In some embodiments, the symbol-and-mapping block-based OCC spreading transmission manner includes that:
in a matrix corresponding to symbols included in an OCC spreading unit, in mapping units corresponding to a same frequency domain position, a same modulation symbol on mapping units corresponding to different time domain positions is spread using different OCC factors in the OCC;
in a matrix corresponding to a mapping block included in an OCC spreading unit, in mapping units corresponding to a same time domain position, a same modulation symbol on mapping units corresponding to different frequency domain positions is spread using different OCC factors in the OCC.

In some embodiments, the slot-and-mapping block-based OCC spreading transmission manner includes that:
in a matrix corresponding to slots included in the OCC spreading unit, in mapping units corresponding to a same frequency domain position, a same modulation symbol on mapping units corresponding to different time domain positions is spread using different OCC factors in the OCC;
in a matrix corresponding to a mapping block included in the OCC spreading unit, in mapping units corresponding to a same time domain position, a same modulation symbol on mapping units corresponding to different frequency domain positions is spread using different OCC factors in the OCC.

In some embodiments, the first time-frequency resource includes time domain units included in an integer number of OCC spreading units; or, time domain units included in one OCC spreading unit includes a plurality of the first time domain resources. The time domain unit is a symbol or a slot.

In some embodiments, the first time-frequency resource includes mapping blocks included in an integer number of OCC spreading units.

In some embodiments, the first time-frequency resource includes time domain units included in an integer number of OCC spreading units, and the first time-frequency resource includes mapping blocks included in an integer number of OCC spreading units.

In some embodiments, the number of time domain units included in the OCC spreading unit corresponds to one of the following:
M PUSCHs, M is an integer multiple of N, N is the OCC length;
1 PUSCH; or
M data symbols, M is an integer multiple of N, and N is the OCC length.

In some embodiments, when the number of time domain units included in the OCC spreading unit corresponds to M PUSCHs, the PUSCH is repeatedly transmitted K times, K is an integer multiple of M, and the interval of data symbols associated with two adjacent OCC factors is the number of data symbols included in M/N PUSCHs.

In some embodiments, when the number of time domain units included in the OCC spreading unit corresponds to one PUSCH, the interval of data symbols associated with two adjacent OCC factors is a ratio of the number of data symbols included in one PUSCH to the OCC length.

In some embodiments, when the number of time domain units included in the OCC spreading unit corresponds to M data symbols, the interval of data symbols associated with two adjacent OCC factors is determined by one or more of the following ways:
a value configured by a network device, a preset value in protocol, and a ratio of the number of data symbols included in one PUSCH to the OCC length.

In some embodiments, a size of a mapping block included in the OCC spreading unit corresponds to one of the following:
physical resource blocks (PRBs) occupied by the first PUSCH transmission; 1 PRB; 1 resource block group (RBG).

In some embodiments, where the size of the mapping block included in the OCC spreading unit corresponds to the number P of PRBs occupied by the first PUSCH transmission, the interval of the number of subcarriers associated with two adjacent OCC factors is determined by one or more of the following ways:
a value configured by a network device configuration, a preset value in protocol, and a ratio of the number of subcarriers included in the P PRBs to the OCC length.

In some embodiments, when the size of the mapping block included in the OCC spreading unit corresponds to one PRB, the interval of the number of subcarriers associated with two adjacent OCC factors is determined by one or more of: a value configured by a network device, a preset value in protocol, and a ratio of the number of subcarriers included in one PRB to the OCC length.

In some embodiments, when the size of the mapping block included in the OCC spreading unit corresponds to one RBG, the interval of the number of subcarriers associated with two adjacent OCC factors is determined by one or more of: a value configured by a network device, a preset value in protocol, and a ratio of the number of subcarriers included in one RBG to the OCC length.

Referring to FIG. 17, a block diagram of an uplink transmission apparatus according to an embodiment of the present application is shown. The uplink transmission apparatus has functions executed by the network device in the methods shown in any one of FIGs. 6 to 8. As shown in FIG. 17, the apparatus may include a receiving module 1701.

The receiving module 1701 is configured to receive uplink transmission information from a terminal device in a case where a first time-frequency resource and a second time-frequency resource overlap in a time domain, and a first physical uplink shared channel (PUSCH) corresponds to an Orthogonal Cover Code (OCC) spreading transmission manner for transmission. The uplink transmission information is transmitted when the terminal device performs transmission processing. The transmission processing includes one or more of the following processing: transmitting information obtained by multiplexing first uplink control information (UCI) and first uplink shared channel (UL-SCH) through the first time-frequency resource; transmitting the first UCI through the first time-frequency resource; transmitting the first UCI through the second time-frequency resource; transmitting the first UL-SCH through the first time-frequency resource; not transmitting the first UL-SCH through the first time-frequency resource; or not transmitting the first UCI through the second time-frequency resource.

The first time-frequency resource is a resource allocated to the terminal device for transmitting the first PUSCH, and the second time-frequency resource is a resource allocated to the terminal device for transmitting a first physical uplink control channel (PUCCH). The first UCI has a mapping relationship with the first PUCCH, and the first UL-SCH has a mapping relationship with the first PUSCH.

In some embodiments, the transmission processing includes one or more of the following processing:
transmitting, through the first time-frequency resource, the information obtained by multiplexing the first UCI and the first UL-SCH and not transmitting, through the second time-frequency resource, the first UCI; or ,
transmitting, through the first time-frequency resource, the first UCI and not transmitting, through the second time-frequency resource, the first UCI; or,
transmitting, through the second time-frequency resource, the first UCI and not transmitting, through the first time-frequency resource, the first UL-SCH; or
transmitting, through the second time-frequency resource, the first UCI and transmitting, through the first time-frequency resource, the first UL-SCH.

In some embodiments, the transmission processing includes an operation that:
in a case where a UL-SCH is carried on the first PUSCH, the information obtained by multiplexing the first UCI and the first UL-SCH is transmitted through the first time-frequency resource;
in a case where the UL-SCH is not carried on the first PUSCH, the first UCI is transmitted through the first time-frequency resource.

In some embodiments, in a case where the information obtained by multiplexing the first UCI and the first UL-SCH is transmitted through the first time-frequency resource, the first UCI corresponds to an OCC spreading transmission manner, and the first UL-SCH corresponds to an OCC spreading transmission manner; or,
in a case where the first UCI is transmitted through the first time-frequency resource, the first UCI corresponds to an OCC spreading transmission manner.

In some embodiments, the OCC spreading transmission manner corresponding to the first UCI is the same as the OCC spreading transmission manner corresponding to the first PUSCH; and/or,
the OCC spreading transmission manner corresponding to the first UL-SCH is the same as the OCC spreading transmission manner corresponding to the first PUSCH.

In some embodiments, the OCC spreading transmission manner corresponding to the first PUSCH includes one of the following:
a symbol-based OCC spreading transmission manner;
a slot-based OCC spreading transmission manner;
a mapping block-based OCC spreading transmission manner;
a symbol-and-mapping block-based OCC spreading transmission manner; or
a slot-and-mapping block-based OCC spreading transmission manner.

In some embodiments, the transmission processing includes that:
a bit sequence is mapped onto mapping units of the first matrix.

The bit sequence includes a first bit sequence and a second bit sequence, the first bit sequence includes a bit sequence corresponding to the first UCI, and the second bit sequence includes a bit sequence corresponding to the first UL-SCH.

The number of rows of mapping units included in the first matrix is determined according to the number of subcarriers used for transmitting the first UCI and the first UL-SCH in the first time-frequency resource. The number of columns of mapping units included in the first matrix is determined according to the number of symbols used for transmitting the first UCI and the first UL-SCH in the first time-frequency resource.

In some embodiments, the transmission processing includes that:
a bit sequence is mapped onto mapping units of the first matrix;

The bit sequence includes a first bit sequence, and the first bit sequence includes a bit sequence corresponding to the first UCI.

The number of rows of mapping units included in the first matrix is determined according to the number of subcarriers used for transmitting the first UCI in the first time-frequency resource. The number of columns of mapping units included in the first matrix is determined according to the number of symbols used for transmitting the first UCI in the first time-frequency resource.

In some embodiments, the operation that the bit sequence is mapped onto the mapping units of the first matrix includes at least one of:
in a case where the OCC spreading transmission manner corresponding to the first PUSCH includes a symbol-based OCC spreading transmission manner, in mapping units in a same row of the first matrix corresponding to symbols included in each OCC spreading unit, a same bit sequence is mapped onto mapping units in different columns which are spread using different OCC factors in a first OCC;
in a case where the OCC spreading transmission manner corresponding to the first PUSCH includes a slot-based OCC spreading transmission manner, in mapping units of multiple first matrixes corresponding to slots included in each OCC spreading unit, a same bit sequence is mapped onto mapping units of different first matrixes which are spread using different OCC factors in a first OCC; or
in a case where the OCC spreading transmission manner corresponding to the first PUSCH includes a mapping block-based OCC spreading transmission manner, in the mapping units in a same column of the first matrix corresponding to mapping blocks included in each OCC spreading unit, a same bit sequence is mapped onto mapping units in different rows which are spread using different OCC factors in a first OCC.

The first OCC is an OCC corresponding to the first PUSCH.

In some embodiments, in a case where the OCC spreading transmission manner corresponding to the first PUSCH includes the symbol or slot-based OCC spreading transmission manner, the OCC spreading unit includes a minimum time domain unit which is spread using different OCC factors in a first OCC; and/or, in a case where the OCC spreading transmission manner corresponding to the first PUSCH includes the mapping block-based OCC spreading transmission manner, the OCC spreading unit includes a minimum mapping block unit which is spread using different OCC factors in a first OCC.

In some embodiments, the bit sequence includes the first bit sequence, and the operation that the bit sequence is mapped onto the mapping units of the first matrix includes at least one of the following cases:
the first bit sequence is mapped onto the mapping units of the first matrix in a rate-matched manner;
the first bit sequence is mapped onto the mapping units of the first matrix in a puncturing manner; or
a first subsequence in the first bit sequence is mapped onto the mapping units of the first matrix in a rate-matched manner, and a second subsequence in the first bit sequence is mapped onto the mapping units of the first matrix in a puncturing manner.

In some embodiments, in a case where the first UCI includes only CSI Part 1, the first subsequence includes a bit sequence corresponding to the CSI Part 1, the second subsequence includes a bit sequence corresponding to hypothetical 2-bit HARQ-ACK information, and the operation that the bit sequence is mapped onto the mapping units of the first matrix includes an operation that:
the first subsequence is mapped onto the mapping units of the first matrix in a rate-matched manner, and the second subsequence is mapped onto the mapping units of the first matrix in a puncturing manner.

In some embodiments, the transmission processing further includes at least one of the following operations:
bits mapped onto each mapping unit of the first matrix are modulated to obtain a modulation symbol;
each modulation symbol is spread using a corresponding OCC factor in the first OCC;
information obtained by performing a DFT operation on spread modulation symbols on each column of mapping units in the first matrix is mapped onto a resource, corresponding to the column, in the first time-frequency resource.

Herein the first OCC is an OCC corresponding to the first PUSCH.

In some embodiments, the transmission processing further includes at least one of the following operations:
bits mapped onto each mapping unit of the first matrix are modulated to obtain a modulation symbol;
information obtained by performing a DFT operation on modulation symbols on each column of mapping units in the first matrix is mapped onto a resource, corresponding to the column, in the first time-frequency resource;
each symbol in the first time-frequency resource is spread using a corresponding OCC factor in the first OCC.

Herein the first OCC is an OCC corresponding to the first PUSCH.

In some embodiments, the transmission processing further includes at least one of the following operations:
bits mapped onto each mapping unit of the first matrix are modulated to obtain a modulation symbol;
each modulation symbol is spread using a corresponding OCC factor in the first OCC;
the spread modulation symbols on each mapping unit in the first matrix are mapped onto a resource, corresponding to the mapping unit, in the first time-frequency resource.

Herein the first OCC is an OCC corresponding to the first PUSCH.

In some embodiments, in a case where the information obtained by multiplexing the first UCI and the first UL-SCH is transmitted through the first time-frequency resource, the first UCI does not correspond to an OCC spreading transmission manner, and the first UL-SCH does not correspond to an OCC spreading transmission manner; or, in a case where the first UCI is transmitted through the first time-frequency resource, the first UCI does not correspond to an OCC spreading transmission manner.

In some embodiments, the mapping relationship between the first UCI and the first PUCCH includes:
the first PUCCH is used for transmitting the first UCI; or,
the first UCI is mapped onto the first PUCCH; or,
the first UCI includes a UCI mapped onto the first PUCCH when the first time-frequency resource and the second time-frequency resource do not overlap in a time domain; or,
the first UCI includes a UCI to be mapped to the first PUCCH without considering overlapping of the first time-frequency resource and the second time-frequency resource in a time domain.

In some embodiments, the mapping relationship between the first UL-SCH and the first PUSCH includes:
the first PUSCH is used for transmitting the first UL-SCH; or,
the first UL-SCH is mapped onto the first PUSCH.

In some embodiments, the first UCI includes one or more of: HARQ-ACK, CSI Part 1, CSI Part 2, or CG-UCI.

In some embodiments, in a case where a UL-SCH is carried on the first PUSCH, the first UCI includes one or more of: HARQ-ACK, CSI Part 1, CSI Part 2, or CG-UCI. Herein,
when the first UCI includes both the HARQ-ACK and the CG-UCI, the HARQ-ACK and the CG-UCI are coded jointly;
when the first UCI does not simultaneously include the HARQ-ACK and the CG-UCI, the HARQ-ACK or the CG-UCI is independently encoded;
when the first UCI includes the CSI Part 1, the CSI Part 1 is independently encoded;
when the first UCI includes the CSI Part 2, the CSI Part 2 is independently encoded. .

In some embodiments, in a case where the first PUSCH does not carry a UL-SCH, the first UCI includes one or more of: HARQ-ACK, CSI Part 1, or CSI Part 2. Herein
when the first UCI includes the HARQ-ACK, the HARQ-ACK is independently encoded;
when the first UCI includes the CSI Part 1, the CSI Part 1 is independently encoded;
when the first UCI includes the CSI Part 2, the CSI Part 2 is independently encoded.

In some embodiments, the first PUSCH corresponds to the OCC spreading transmission manner, which includes that:
it is determined that the first PUSCH corresponds to the OCC spreading transmission manner according to first configuration information transmitted by a network device.

In some embodiments, the first configuration information is carried in at least one of a system message, a RRC, a MAC CE, or DCI.

In some embodiments, the OCC spreading transmission manner corresponding to the first PUSCH is determined according to the first configuration information.

In some embodiments, the OCC spreading transmission manner corresponding to the first PUSCH is predefined.

In some embodiments, the symbol-based OCC spreading transmission manner includes that:
in a matrix corresponding to symbols included in the OCC spreading unit, in mapping units corresponding to a same frequency domain position, a same modulation symbol on mapping units corresponding to different time domain positions is spread using different OCC factors in the OCC;

The slot-based OCC spreading transmission manner includes that:
in a matrix corresponding to slots included in the OCC spreading unit, in mapping units corresponding to a same frequency domain position, a same modulation symbol on mapping units corresponding to different time domain positions is spread using different OCC factors in the OCC.

In some embodiments, the mapping block-based OCC spreading transmission manner includes that:
in a matrix corresponding to a mapping block included in an OCC spreading unit, in mapping units corresponding to a same time domain position, a same modulation symbol on mapping units corresponding to different frequency domain positions is spread using different OCC factors in the OCC.

In some embodiments, the symbol-and-mapping block-based OCC spreading transmission manner includes that:
in a matrix corresponding to symbols included in an OCC spreading unit, in mapping units corresponding to a same frequency domain position, a same modulation symbol on mapping units corresponding to different time domain positions is spread using different OCC factors in the OCC;
in a matrix corresponding to a mapping block included in an OCC spreading unit, in mapping units corresponding to a same time domain position, a same modulation symbol on mapping units corresponding to different frequency domain positions is spread using different OCC factors in the OCC.

In some embodiments, the slot-and-mapping block-based OCC spreading transmission manner includes that:
in a matrix corresponding to slots included in an OCC spreading unit, in mapping units corresponding to a same frequency domain position, a same modulation symbol on mapping units corresponding to different time domain positions is spread using different OCC factors in the OCC;
in a matrix corresponding to a mapping block included in an OCC spreading unit, in mapping units corresponding to a same time domain position, a same modulation symbol on mapping units corresponding to different frequency domain positions is spread using different OCC factors in the OCC.

In some embodiments, the first time-frequency resource includes time domain units included in an integer number of OCC spreading units; or, time domain units included in one OCC spreading unit includes a plurality of the first time domain resources. The time domain unit is a symbol or a slot.

In some embodiments, the first time-frequency resource includes mapping blocks included in an integer number of OCC spreading units.

In some embodiments, the first time-frequency resource includes time domain units included in an integer number of OCC spreading units, and the first time-frequency resource includes mapping blocks included in an integer number of OCC spreading units.

In some embodiments, the number of time domain units included in the OCC spreading unit corresponds to one of the following:
M PUSCHs, M is an integer multiple of N, N is the OCC length;
1 PUSCH; or
M data symbols, M is an integer multiple of N, and N is the OCC length.

In some embodiments, when the number of time domain units included in the OCC spreading unit corresponds to M PUSCHs, the PUSCH is repeatedly transmitted K times, K is an integer multiple of M, and the interval of data symbols associated with two adjacent OCC factors is the number of data symbols included in M/N PUSCHs.

In some embodiments, when the number of time domain units included in the OCC spreading unit corresponds to one PUSCH, the interval of data symbols associated with two adjacent OCC factors is a ratio of the number of data symbols included in one PUSCH to the OCC length.

In some embodiments, when the number of time domain units included in the OCC spreading unit corresponds to M data symbols, the interval of data symbols associated with two adjacent OCC factors is determined by one or more of the following ways:
a value configured by a network device, a preset value in protocol, and a ratio of the number of data symbols included in one PUSCH to the OCC length.

In some embodiments, a size of a mapping block included in the OCC spreading unit corresponds to one of the following:
physical resource blocks (PRBs) occupied by the first PUSCH transmission; 1 PRB; 1 resource block group (RBG).

In some embodiments, where the size of the mapping block included in the OCC spreading unit corresponds to the number P of PRBs occupied by the first PUSCH transmission, the interval of the number of subcarriers associated with two adjacent OCC factors is determined by one or more of the following ways:
a value configured by a network device configuration, a preset value in protocol, and a ratio of the number of subcarriers included in the P PRBs to the OCC length.

In some embodiments, when the size of the mapping block included in the OCC spreading unit corresponds to one PRB, the interval of the number of subcarriers associated with two adjacent OCC factors is determined by one or more of: a value configured by a network device, a preset value in protocol, and a ratio of the number of subcarriers included in one PRB to the OCC length.

In some embodiments, when the size of the mapping block included in the OCC spreading unit corresponds to one RBG, the interval of the number of subcarriers associated with two adjacent OCC factors is determined by one or more of: a value configured by a network device, a preset value in protocol, and a ratio of the number of subcarriers included in one RBG to the OCC length.

It should be noted that when the device provided in the above-described embodiments realizes its function, only the division of each of the above-described functional modules is used as an example. In practical application, the above-described function allocation can be completed by different functional modules according to actual needs, that is, the content structure of the device can be divided into different functional modules to complete all or part of the above-described functions.

Regarding the apparatus in the above-described embodiments, the specific manner in which each module performs an operation has been described in detail in the embodiments relating to the method, and will not be described in detail here.

Referring to FIG. 18, a schematic structural diagram of a communication device 1800 according to an embodiment of the present application is shown. The communication device 1800 may include a processor 1801, a receiver 1802, a transmitter 1803, a memory 1804, and a bus 1805.

The processor 1801 includes one or more processing cores, and executes various functional applications and information processing by executing software programs and modules.

The receiver 1802 and the transmitter 1803 may be implemented as a communication component, which may be a communication chip. The communication chip may also be referred to as a transceiver. The memory 1804 is connected to the processor 1801 via a bus 1805. The memory 1804 may be used to store a computer program that is used by the processor 1801 to execute to implement various operations in the method embodiments described above.

Further, the memory 1804 may be implemented by any type of volatile or nonvolatile storage device, including, but not limited to, magnetic or optical disks, electrically erasable programmable read-only memories, erasable programmable read-only memories, static readily accessible memories, read-only memories, magnetic memories, flash memories, programmable read-only memories, or a combination thereof.

In an exemplary aspect, when the communication device 1800 is implemented as the terminal device described above, the receiver 1802 and the processor 1801 execute the computer program to cause the communication device to implement various operations performed by the terminal device in the methods shown in any one of FIGs. 6 to 8.

In an exemplary embodiment, when the communication device 1800 is implemented as the network device described above, the transmitter 1803 and the processor 1801 execute the computer program to cause the communication device to implement various operations performed by the network device in the methods shown in any one of FIGs. 6 to 8.

An embodiment of the present application also provides a computer-readable storage medium having stored thereon a computer program, and the computer program is loaded and executed by a processor to realize all or part of the operations executed by a terminal device or a network device in the methods shown in any one of FIGs. 6 to 8.

The present application also provides a chip including an integrated circuit and firmware provided in the integrated circuit, and the chip is used for operating in a communication device so that the communication device performs all or part of the operations performed by a terminal device or a network device in the methods shown in any one of FIGs. 6 to 8.

The present application also provides a computer program product, the computer program product or computer program includes computer instructions stored in a computer readable storage medium. The processor of the communication device reads the computer instructions from the computer-readable storage medium, and the processor executes the computer instructions to cause the communication device to perform all or part of the operations performed by a terminal device or a network device in the methods shown in any one of FIGs. 6 to 8 described above.

The present application also provides a computer program executed by a processor of a communication device to implement all or part of the operations executed by a terminal device or a network device in the methods shown in any one of FIGs. 6 to 8.

Those skilled in the art will recognize that in one or more of the examples described above, the functions described in the embodiments of the present application may be implemented in hardware, software, firmware, or any combination thereof. When implemented using software, these functions may be stored in a computer readable medium or transmitted as one or more instructions or code on a computer readable medium. The computer-readable medium includes a computer storage medium and a communication medium, wherein the communication medium includes any medium that facilitates the transfer of a computer program from one place to another. The storage medium may be any available medium accessible by a general-purpose or special-purpose computer.

The above are only exemplary embodiments of the present application, and are not intended to limit the present application. Any modifications, equivalent substitutions, improvements, etc. made within the spirit and principles of the present application should be included in the scope of protection of the present application.

## Claims

1. A method for uplink transmission, performed by a terminal device, the method comprising:
in a case where a first time-frequency resource and a second time-frequency resource overlap in a time domain, and a first physical uplink shared channel (PUSCH) corresponds to an Orthogonal Cover Code (OCC) spreading transmission manner, performing transmission processing;
the transmission processing comprising one or more of the following processing:
transmitting, through the first time-frequency resource, information obtained by multiplexing first uplink control information (UCI) and a first uplink shared channel (UL-SCH);
transmitting, through the first time-frequency resource, the first UCI;
transmitting, through the second time-frequency resource, the first UCI;
transmitting, through the first time-frequency resource, the first UL-SCH;
not transmitting, through the first time-frequency resource, the first UL-SCH; or
not transmitting, through the second time-frequency resource, the first UCI;
wherein the first time-frequency resource is a resource allocated to the terminal device for transmitting the first PUSCH, and the second time-frequency resource is a resource allocated to the terminal device for transmitting a first physical uplink control channel (PUCCH), and wherein the first UCI has a mapping relationship with the first PUCCH, and the first UL-SCH has a mapping relationship with the first PUSCH.

2. The method of claim 1, wherein the transmission processing comprises one or more of the following:
transmitting, through the first time-frequency resource, the information obtained by multiplexing the first UCI and the first UL-SCH and not transmitting, through the second time-frequency resource, the first UCI; or,
transmitting, through the first time-frequency resource, the first UCI and not transmitting, through the second time-frequency resource, the first UCI; or,
transmitting, through the second time-frequency resource, the first UCI and not transmitting, through the first time-frequency resource, the first UL-SCH; or
transmitting, through the second time-frequency resource, the first UCI and transmitting, through the first time-frequency resource, the first UL-SCH.

3. The method of claim 1 or 2, wherein transmitting, through the first time-frequency resource, the information obtained by multiplexing the first UCI and the first UL-SCH comprises:
in a case where a UL-SCH is carried on the first PUSCH, transmitting, through the first time-frequency resource, the information obtained by multiplexing the first UCI and the first UL-SCH;
transmitting, through the first time-frequency resource, the first UCI comprises:
in a case where the UL-SCH is not carried on the first PUSCH, transmitting, through the first time-frequency resource, the first UCI.

4. The method of any one of claims 1 to 3, wherein, in a case where the information obtained by multiplexing the first UCI and the first UL-SCH is transmitted through the first time-frequency resource, the first UCI corresponds to an OCC spreading transmission manner, and the first UL-SCH corresponds to an OCC spreading transmission manner; or,
in a case where the first UCI is transmitted through the first time-frequency resource, the first UCI corresponds to an OCC spreading transmission manner.

5. The method of claim 4, wherein the OCC spreading transmission manner corresponding to the first UCI is the same as the OCC spreading transmission manner corresponding to the first PUSCH; and/or,
the OCC spreading transmission manner corresponding to the first UL-SCH is the same as the OCC spreading transmission manner corresponding to the first PUSCH.

6. The method of any one of claims 1 to 5, wherein the OCC spreading transmission manner corresponding to the first PUSCH comprises one of:
a symbol-based OCC spreading transmission manner;
a slot-based OCC spreading transmission manner;
a mapping block-based OCC spreading transmission manner;
a symbol-and-mapping block-based OCC spreading transmission manner; or
a slot-and-mapping block-based OCC spreading transmission manner.

7. The method of any one of claims 1 to 6, wherein transmitting, through the first time-frequency resource, the information obtained by multiplexing the first UCI and the first UL-SCH comprises:
mapping a bit sequence onto mapping units of a first matrix;
wherein the bit sequence comprises a first bit sequence and a second bit sequence, the first bit sequence comprises a bit sequence corresponding to the first UCI, and the second bit sequence comprises a bit sequence corresponding to the first UL-SCH;
wherein a number of rows of mapping units comprised in the first matrix is determined according to a number of subcarriers used for transmitting the first UCI and the first UL-SCH in the first time-frequency resource, and a number of columns of mapping units comprised in the first matrix is determined according to a number of symbols used for transmitting the first UCI and the first UL-SCH in the first time-frequency resource.

8. The method of any one of claims 1 to 6, wherein transmitting, through the first time-frequency resource, the first UCI comprises:
mapping a bit sequence onto mapping units of a first matrix;
wherein the bit sequence comprises a first bit sequence, and the first bit sequence comprises a bit sequence corresponding to the first UCI;
wherein a number of rows of mapping units comprised in the first matrix is determined according to a number of subcarriers used for transmitting the first UCI in the first time-frequency resource and a number of columns of mapping units comprised in the first matrix is determined according to a number of symbols used for transmitting the first UCI in the first time-frequency resource.

9. The method of claim 7 or 8, wherein mapping the bit sequence onto the mapping units of the first matrix comprises at least one of:
in a case where the OCC spreading transmission manner corresponding to the first PUSCH comprises a symbol-based OCC spreading transmission manner, in mapping units in a same row of the first matrix corresponding to symbols comprised in each OCC spreading unit, mapping a same bit sequence onto mapping units in different columns which are spread using different OCC factors in a first OCC;
in a case where the OCC spreading transmission manner corresponding to the first PUSCH comprises a slot-based OCC spreading transmission manner, in mapping units of multiple first matrixes corresponding to slots comprised in each OCC spreading unit, mapping a same bit sequence onto mapping units of different first matrixes which are spread using different OCC factors in a first OCC; or
in a case where the OCC spreading transmission manner corresponding to the first PUSCH comprises a mapping block-based OCC spreading transmission manner, in mapping units in a same column of the first matrix corresponding to a mapping block comprised in each OCC spreading unit, mapping a same bit sequence onto mapping units in different rows which are spread using different OCC factors in a first OCC;
wherein the first OCC is an OCC corresponding to the first PUSCH.

10. The method of claim 9, wherein in a case where the OCC spreading transmission manner corresponding to the first PUSCH comprises the symbol or slot-based OCC spreading transmission manner, the OCC spreading unit comprises a minimum time domain unit which is spread using different OCC factors in a first OCC; and/or,
in a case where the OCC spreading transmission manner corresponding to the first PUSCH comprises the mapping block-based OCC spreading transmission manner, the OCC spreading unit comprises a minimum mapping block unit which is spread using different OCC factors in a first OCC.

11. The method of any one of claims 7 to 10, wherein the bit sequence comprises the first bit sequence, and mapping the bit sequence onto the mapping units of the first matrix comprises at least one of:
mapping the first bit sequence onto the mapping units of the first matrix in a rate-matched manner;
mapping the first bit sequence onto the mapping units of the first matrix in a puncturing manner; or
mapping a first subsequence in the first bit sequence onto the mapping units of the first matrix in the rate-matched manner, and mapping a second subsequence in the first bit sequence onto the mapping units of the first matrix in the puncturing manner.

12. The method of any one of claims 7 to 11, wherein in a case where the first UCI comprises only CSI Part 1, a first subsequence comprises a bit sequence corresponding to the CSI Part 1, a second subsequence comprises a bit sequence corresponding to hypothetical 2-bit HARQ-ACK information, and mapping the bit sequence onto the mapping units of the first matrix comprises:
mapping the first subsequence onto the mapping units of the first matrix in a rate-matched manner, and mapping the second subsequence onto the mapping units of the first matrix in a puncturing manner.

13. The method of any one of claims 7 to 12, further comprising at least one of the following operations:
modulating bits mapped onto each mapping unit of the first matrix to obtain a modulation symbol;
spreading each modulation symbol using a corresponding OCC factor in the first OCC;
mapping information obtained by performing a DFT operation on spread modulation symbols on each column of mapping units in the first matrix, onto a resource, corresponding to the column, in the first time-frequency resource;
wherein the first OCC is an OCC corresponding to the first PUSCH.

14. The method of any one of claims 7 to 12, further comprising at least one of the following operations:
modulating bits mapped onto each mapping unit of the first matrix to obtain a modulation symbol;
mapping information obtained by performing a DFT operation on modulation symbols on each column of mapping units in the first matrix, onto a resource, corresponding to the column, in the first time-frequency resource;
spreading each symbol in the first time-frequency resource using a corresponding OCC factor in the first OCC;
wherein the first OCC is an OCC corresponding to the first PUSCH.

15. The method of any one of claims 7 to 12, further comprising at least one of the following operations:
modulating bits mapped onto each mapping unit of the first matrix to obtain a modulation symbol;
spreading each modulation symbol using a corresponding OCC factor in the first OCC;
mapping the spread modulation symbols on each mapping unit in the first matrix onto a resource, corresponding to the mapping unit, in the first time-frequency resource;
wherein the first OCC is an OCC corresponding to the first PUSCH.

16. The method of any one of claims 1 to 3, wherein in a case where the information obtained by multiplexing the first UCI and the first UL-SCH is transmitted through the first time-frequency resource, the first UCI does not correspond to an OCC spreading transmission manner, and the first UL-SCH does not correspond to an OCC spreading transmission manner; or,
in a case where the first UCI is transmitted through the first time-frequency resource, the first UCI does not correspond to an OCC spreading transmission manner.

17. The method of any one of claims 1 to 16, wherein the mapping relationship between the first UCI and the first PUCCH comprises:
the first PUCCH is used for transmitting the first UCI; or,
the first UCI is mapped onto the first PUCCH; or,
the first UCI comprises a UCI mapped onto the first PUCCH when the first time-frequency resource and the second time-frequency resource do not overlap in a time domain; or,
the first UCI comprises a UCI to be mapped to the first PUCCH without considering overlapping of the first time-frequency resource and the second time-frequency resource in a time domain.

18. The method of any one of claims 1 to 17, wherein the mapping relationship between the first UL-SCH and the first PUSCH comprises:
the first PUSCH is used for transmitting the first UL-SCH; or,
the first UL-SCH is mapped onto the first PUSCH.

19. The method of any one of claims 1 to 18, wherein the first UCI comprises one or more of: HARQ-ACK, CSI Part 1, CSI Part 2, CG-UCI.

20. The method of claim 19, wherein in a case where a UL-SCH is carried on the first PUSCH, the first UCI comprises one or more of: HARQ-ACK, CSI Part 1, CSI Part 2, or CG-UCI,
wherein
when the first UCI comprises both the HARQ-ACK and the CG-UCI, the HARQ-ACK and the CG-UCI are coded jointly;
when the first UCI does not simultaneously comprise the HARQ-ACK and the CG-UCI, the HARQ-ACK or the CG-UCI is independently encoded;
when the first UCI comprises the CSI Part 1, the CSI Part 1 is independently encoded;
when the first UCI comprises the CSI Part 2, the CSI Part 2 is independently encoded.

21. The method of claim 19, wherein, in a case where the first PUSCH does not carry a UL-SCH, the first UCI comprises one or more of: HARQ-ACK, CSI Part 1, or CSI Part 2,
wherein
when the first UCI comprises the HARQ-ACK, the HARQ-ACK is independently encoded;
when the first UCI comprises the CSI Part 1, the CSI Part 1 is independently encoded;
when the first UCI comprises the CSI Part 2, the CSI Part 2 is independently encoded.

22. The method of any one of claims 1 to 21, wherein the first PUSCH corresponds to the OCC spreading transmission manner, comprises:
determining, according to first configuration information transmitted by a network device, that the first PUSCH corresponds to the OCC spreading transmission manner.

23. The method of claim 22, wherein the first configuration information is carried in at least one of a system message, a RRC, a MAC CE, or DCI.

24. The method of claim 22 or 23, wherein the OCC spreading transmission manner corresponding to the first PUSCH is determined from the first configuration information.

25. The method of any one of claims 1 to 23, wherein the OCC spreading transmission manner corresponding to the first PUSCH is predefined.

26. An uplink transmission method, performed by a network device, the method comprising:
in a case where a first time-frequency resource and a second time-frequency resource overlap in a time domain, and a first physical uplink shared channel (PUSCH) corresponds to an Orthogonal Cover Code (OCC) spreading transmission manner for transmission, receiving uplink transmission information from a terminal device;
the uplink transmission information being transmitted when the terminal device performs transmission processing,
the transmission processing comprising one or more of the following processing:
transmitting, through the first time-frequency resource, information obtained by multiplexing first uplink control information (UCI) and a first uplink shared channel (UL-SCH);
transmitting, through the first time-frequency resource, the first UCI;
transmitting, through the second time-frequency resource, the first UCI;
transmitting, through the first time-frequency resource, the first UL-SCH;
not transmitting, through the first time-frequency resource, the first UL-SCH; or
not transmitting, through the second time-frequency resource, the first UCI;
wherein the first time-frequency resource is a resource allocated to the terminal device for transmitting the first PUSCH, and the second time-frequency resource is a resource allocated to the terminal device for transmitting a first physical uplink control channel (PUCCH), and wherein the first UCI has a mapping relationship with the first PUCCH, and the first UL-SCH has a mapping relationship with the first PUSCH.

27. The method of claim 26, wherein the transmission processing comprises one or more of the following:
transmitting, through the first time-frequency resource, the information obtained by multiplexing the first UCI and the first UL-SCH and not transmitting, through the second time-frequency resource, the first UCI; or,
transmitting, through the first time-frequency resource, the first UCI and not transmitting, through the second time-frequency resource, the first UCI; or,
transmitting, through the second time-frequency resource, the first UCI and not transmitting, through the first time-frequency resource, the first UL-SCH; or
transmitting, through the second time-frequency resource, the first UCI and transmitting, through the first time-frequency resource, the first UL-SCH.

28. The method of claim 26 or 27, wherein the transmission processing comprises:
in a case where a UL-SCH is carried on the first PUSCH, transmitting, through the first time-frequency resource, the information obtained by multiplexing the first UCI and the first UL-SCH
in a case where the UL-SCH is not carried on the first PUSCH, transmitting, through the first time-frequency resource, the first UCI.

29. The method of any one of claims 26 to 28, wherein, in a case where the information obtained by multiplexing the first UCI and the first UL-SCH is transmitted through the first time-frequency resource, the first UCI corresponds to an OCC spreading transmission manner, and the first UL-SCH corresponds to an OCC spreading transmission manner; or,
in a case where the first UCI is transmitted through the first time-frequency resource, the first UCI corresponds to an OCC spreading transmission manner.

30. The method of claim 29, wherein the OCC spreading transmission manner corresponding to the first UCI is the same as the OCC spreading transmission manner corresponding to the first PUSCH; and/or,
the OCC spreading transmission manner corresponding to the first UL-SCH is the same as the OCC spreading transmission manner corresponding to the first PUSCH.

31. The method of any one of claims 26 to 30, wherein the OCC spreading transmission manner corresponding to the first PUSCH comprises one of:
a symbol-based OCC spreading transmission manner;
a slot-based OCC spreading transmission manner;
a mapping block-based OCC spreading transmission manner;
a symbol-and-mapping block-based OCC spreading transmission manner; or
a slot-and-mapping block-based OCC spreading transmission manner.

32. The method of any one of claims 26 to 31, wherein the transmission processing comprises:
mapping a bit sequence onto mapping units of a first matrix;
wherein the bit sequence comprises a first bit sequence and a second bit sequence, the first bit sequence comprises a bit sequence corresponding to the first UCI, and the second bit sequence comprises a bit sequence corresponding to the first UL-SCH;
wherein a number of rows of mapping units comprised in the first matrix is determined according to a number of subcarriers used for transmitting the first UCI and the first UL-SCH in the first time-frequency resource, and a number of columns of mapping units comprised in the first matrix is determined according to a number of symbols used for transmitting the first UCI and the first UL-SCH in the first time-frequency resource.

33. The method of any one of claims 26 to 31, wherein the transmission processing comprises:
mapping a bit sequence onto mapping units of a first matrix;
wherein the bit sequence comprises a first bit sequence, and the first bit sequence comprises a bit sequence corresponding to the first UCI;
wherein a number of rows of mapping units comprised in the first matrix is determined according to a number of subcarriers used for transmitting the first UCI in the first time-frequency resource and a number of columns of mapping units comprised in the first matrix is determined according to a number of symbols used for transmitting the first UCI in the first time-frequency resource.

34. The method of claim 32 or 33, wherein mapping the bit sequence onto the mapping units of the first matrix comprises at least one of:
in a case where the OCC spreading transmission manner corresponding to the first PUSCH comprises a symbol-based OCC spreading transmission manner, in mapping units in a same row of the first matrix corresponding to symbols comprised in each OCC spreading unit, mapping a same bit sequence onto mapping units in different columns which are spread using different OCC factors in a first OCC;
in a case where the OCC spreading transmission manner corresponding to the first PUSCH comprises a slot-based OCC spreading transmission manner, in mapping units of multiple first matrixes corresponding to slots comprised in each OCC spreading unit, mapping a same bit sequence onto mapping units of different first matrixes which are spread using different OCC factors in a first OCC; or
in a case where the OCC spreading transmission manner corresponding to the first PUSCH comprises a mapping block-based OCC spreading transmission manner, in mapping units in a same column of the first matrix corresponding to a mapping block comprised in each OCC spreading unit, mapping a same bit sequence onto mapping units in different rows which are spread using different OCC factors in a first OCC;
wherein the first OCC is an OCC corresponding to the first PUSCH.

35. The method of claim 34, wherein in a case where the OCC spreading transmission manner corresponding to the first PUSCH comprises the symbol or slot-based OCC spreading transmission manner, the OCC spreading unit comprises a minimum time domain unit which is spread using different OCC factors in a first OCC; and/or,
in a case where the OCC spreading transmission manner corresponding to the first PUSCH comprises the mapping block-based OCC spreading transmission manner, the OCC spreading unit comprises a minimum mapping block unit which is spread using different OCC factors in a first OCC.

36. The method of any one of claims 32 to 35, wherein the bit sequence comprises the first bit sequence, and mapping the bit sequence onto the mapping units of the first matrix comprises at least one of:
mapping the first bit sequence onto the mapping units of the first matrix in a rate-matched manner;
mapping the first bit sequence onto the mapping units of the first matrix in a puncturing manner; or
mapping a first subsequence in the first bit sequence onto the mapping units of the first matrix in the rate-matched manner, and mapping a second subsequence in the first bit sequence onto the mapping units of the first matrix in the puncturing manner.

37. The method of any one of claims 32 to 36, wherein in a case where the first UCI comprises only CSI Part 1, a first subsequence comprises a bit sequence corresponding to the CSI Part 1, a second subsequence comprises a bit sequence corresponding to hypothetical 2-bit HARQ-ACK information, and mapping the bit sequence onto the mapping units of the first matrix comprises:
mapping the first subsequence onto the mapping units of the first matrix in a rate-matched manner, and mapping the second subsequence onto the mapping units of the first matrix in a puncturing manner.

38. The method of any one of claims 32 to 37, wherein the transmission processing further comprises at least one of the following operations:
modulating bits mapped onto each mapping unit of the first matrix to obtain a modulation symbol;
spreading each modulation symbol using a corresponding OCC factor in the first OCC;
mapping information obtained by performing a DFT operation on spread modulation symbols on each column of mapping units in the first matrix, onto a resource, corresponding to the column, in the first time-frequency resource;
wherein the first OCC is an OCC corresponding to the first PUSCH.

39. The method of any one of claims 32 to 37, wherein the transmission processing further comprises at least one of the following operations:
modulating bits mapped onto each mapping unit of the first matrix to obtain a modulation symbol;
mapping information obtained by performing a DFT operation on modulation symbols on each column of mapping units in the first matrix, onto a resource, corresponding to the column, in the first time-frequency resource;
spreading each symbol in the first time-frequency resource using a corresponding OCC factor in the first OCC;
wherein the first OCC is an OCC corresponding to the first PUSCH.

40. The method of any one of claims 32 to 37, wherein the transmission processing further comprises at least one of the following operations:
modulating bits mapped onto each mapping unit of the first matrix to obtain a modulation symbol;
spreading each modulation symbol using a corresponding OCC factor in the first OCC;
mapping the spread modulation symbols on each mapping unit in the first matrix onto a resource, corresponding to the mapping unit, in the first time-frequency resource;
wherein the first OCC is an OCC corresponding to the first PUSCH.

41. The method of any one of claims 26 to 28, wherein in a case where the information obtained by multiplexing the first UCI and the first UL-SCH is transmitted through the first time-frequency resource, the first UCI does not correspond to an OCC spreading transmission manner, and the first UL-SCH does not correspond to an OCC spreading transmission manner; or,
in a case where the first UCI is transmitted through the first time-frequency resource, the first UCI does not correspond to an OCC spreading transmission manner.

42. The method of any one of claims 26 to 41, wherein the mapping relationship between the first UCI and the first PUCCH comprises:
the first PUCCH is used for transmitting the first UCI; or,
the first UCI is mapped onto the first PUCCH; or,
the first UCI comprises a UCI mapped onto the first PUCCH when the first time-frequency resource and the second time-frequency resource do not overlap in a time domain; or,
the first UCI comprises a UCI to be mapped to the first PUCCH without considering overlapping of the first time-frequency resource and the second time-frequency resource in a time domain.

43. The method of any one of claims 26 to 42, wherein the mapping relationship between the first UL-SCH and the first PUSCH comprises:
the first PUSCH is used for transmitting the first UL-SCH; or,
the first UL-SCH is mapped onto the first PUSCH.

44. The method of any one of claims 26 to 43, wherein the first UCI comprises one or more of: HARQ-ACK, CSI Part 1, CSI Part 2, CG-UCI.

45. The method of claim 44, wherein in a case where a UL-SCH is carried on the first PUSCH, the first UCI comprises one or more of: HARQ-ACK, CSI Part 1, CSI Part 2, or CG-UCI,
wherein
when the first UCI comprises both the HARQ-ACK and the CG-UCI, the HARQ-ACK and the CG-UCI are coded jointly;
when the first UCI does not simultaneously comprise the HARQ-ACK and the CG-UCI, the HARQ-ACK or the CG-UCI is independently encoded;
when the first UCI comprises the CSI Part 1, the CSI Part 1 is independently encoded; when the first UCI comprises the CSI Part 2, the CSI Part 2 is independently encoded.

46. The method of claim 44, wherein, in a case where the first PUSCH does not carry a UL-SCH, the first UCI comprises one or more of: HARQ-ACK, CSI Part 1, or CSI Part 2, wherein
when the first UCI comprises the HARQ-ACK, the HARQ-ACK is independently encoded;
when the first UCI comprises the CSI Part 1, the CSI Part 1 is independently encoded; when the first UCI comprises the CSI Part 2, the CSI Part 2 is independently encoded.

47. The method of any one of claims 26 to 46, wherein the first PUSCH corresponds to the OCC spreading transmission manner, comprises:
determining, according to first configuration information transmitted by a network device, that the first PUSCH corresponds to the OCC spreading transmission manner.

48. The method of claim 47, wherein the first configuration information is carried in at least one of a system message, a RRC, a MAC CE, or DCI.

49. The method of claim 47 or 48, wherein the OCC spreading transmission manner corresponding to the first PUSCH is determined from the first configuration information.

50. The method of any one of claims 26 to 48, wherein the OCC spreading transmission manner corresponding to the first PUSCH is predefined.

51. An uplink transmission apparatus comprising:
a transmission module configured to perform transmission processing in a case where a first time-frequency resource and a second time-frequency resource overlap in a time domain, and a first physical uplink shared channel (PUSCH) corresponds to an Orthogonal Cover Code (OCC) spreading transmission manner;
the transmission processing comprising one or more of the following processing:
transmitting, through the first time-frequency resource, information obtained by multiplexing first uplink control information (UCI) and a first uplink shared channel (UL-SCH);
transmitting, through the first time-frequency resource, the first UCI;
transmitting, through the second time-frequency resource, the first UCI;
transmitting, through the first time-frequency resource, the first UL-SCH;
not transmitting, through the first time-frequency resource, the first UL-SCH; or
not transmitting, through the second time-frequency resource, the first UCI;
wherein the first time-frequency resource is a resource allocated to the terminal device for transmitting the first PUSCH, and the second time-frequency resource is a resource allocated to the terminal device for transmitting a first physical uplink control channel (PUCCH), and wherein the first UCI has a mapping relationship with the first PUCCH, and the first UL-SCH has a mapping relationship with the first PUSCH.

52. An uplink transmission apparatus comprising:
a receiving module configured to receive uplink transmission information from a terminal device in a case where a first time-frequency resource and a second time-frequency resource overlap in a time domain, and a first physical uplink shared channel (PUSCH) corresponds to an Orthogonal Cover Code (OCC) spreading transmission manner for transmission;
the uplink transmission information being transmitted when the terminal device performs transmission processing,
the transmission processing comprising one or more of the following processing:
transmitting, through the first time-frequency resource, information obtained by multiplexing first uplink control information (UCI) and a first uplink shared channel (UL-SCH);
transmitting, through the first time-frequency resource, the first UCI;
transmitting, through the second time-frequency resource, the first UCI;
transmitting, through the first time-frequency resource, the first UL-SCH;
not transmitting, through the first time-frequency resource, the first UL-SCH; or
not transmitting, through the second time-frequency resource, the first UCI;
wherein the first time-frequency resource is a resource allocated to the terminal device for transmitting the first PUSCH, and the second time-frequency resource is a resource allocated to the terminal device for transmitting a first physical uplink control channel (PUCCH), and wherein the first UCI has a mapping relationship with the first PUCCH, and the first UL-SCH has a mapping relationship with the first PUSCH.

53. A communication device comprising:
a processor;
a memory for storing a computer program; and
a transceiver,
wherein the processor is configured to execute the computer program to cause a network device to implement the method of uplink transmission of any one of claims 1 to 50.

54. A computer-readable storage medium having stored thereon a computer program for being executed by a processor of a communication device to cause the communication device to implement the method of uplink transmission of any one of claims 1 to 50.

55. A chip comprising an integrated circuit and a firmware disposed in the integrated circuit, the chip operating in a communication device to cause the communication device to perform the method of uplink transmission of any one of claims 1 to 50.

56. A computer program product comprising computer instructions stored in a computer-readable storage medium; a processor of a communication device reads the computer instructions from the computer-readable storage medium and executes the computer instructions, to cause the communication device to perform the method of uplink transmission of any one of claims 1 to 50.

57. A computer program executed by a processor of a communication device to cause the communication device to implement the method of uplink transmission of any one of claims 1 to 50.
